Europäisches Patentamt

European Patent Office

Office européen des brevets

(19)

(11) **EP 0 931 312 B1**

(12) **EUROPÄISCHE PATENTSCHRIFT**

(45) Veröffentlichungstag und Bekanntmachung des Hinweises auf die Patenterteilung:
**17.03.2004   Patentblatt 2004/12**

(21) Anmeldenummer: **97910247.2**

(22) Anmeldetag: **01.10.1997**

(51) Int Cl.[7]: **G11B 7/09**, G11B 33/08

(86) Internationale Anmeldenummer:
**PCT/DE1997/002257**

(87) Internationale Veröffentlichungsnummer:
**WO 1998/016924 (23.04.1998 Gazette 1998/16)**

(54) **VERFAHREN ZUM REGELN DER FOKUSSIERUNG UND DER FÜHRUNG EINES LICHTSTRAHLS**

METHOD OF REGULATING THE FOCUSING AND GUIDING OF A LIGHT BEAM

PROCEDE DE REGLAGE DE LA FOCALISATION ET DU GUIDAGE D'UN FAISCEAU LUMINEUX

(84) Benannte Vertragsstaaten:
**DE ES FR GB IT**

(30) Priorität: **14.10.1996  DE 19642343**

(43) Veröffentlichungstag der Anmeldung:
**28.07.1999   Patentblatt 1999/30**

(73) Patentinhaber: **ROBERT BOSCH GMBH**
**70442 Stuttgart (DE)**

(72) Erfinder:
• **BUCHS, Willy**
**CH-1027 Lonay (CH)**
• **BAAS, Dieter**
**D-77694 Auenheim (DE)**
• **COCHARD, Roland**
**CH-1110 Morges (CH)**
• **JEANNIN, Pierre**
**CH-1110 Morges (CH)**

(56) Entgegenhaltungen:
EP-A- 0 176 602          WO-A-90/13895
WO-A-95/27282          DE-A- 4 235 237
US-A- 4 614 863

• **PATENT ABSTRACTS OF JAPAN vol. 096, no. 005, 31.Mai 1996 & JP 08 011637 A (KYOCERA CORP), 16.Januar 1996,**
• **MASAMI TOMITA ET AL: "A CAR-USE MINI DISC (MD) CHANGER" IEEE TRANSACTIONS ON CONSUMER ELECTRONICS, Bd. 41, Nr. 3, 1.August 1995, Seiten 827-834, XP000539542**

**Beschreibung**

Stand der Technik

Die Erfindung geht von einem Verfahren zum Regeln der Fokussierung und der Führung eines Lichtstrahls nach der Gattung des Hauptanspruchs aus. Aus der WO 92/04712 ist bereits ein Verfahren bekannt, bei dem eine optische Abtastvorrichtung, deren Objektivlinse einen Lichtstrahl mittels eines Fokusregelkreises auf eine rotierende CD-Platte fokussiert, das Datensignal an einen Verstärker gibt. Dabei erzeugt die optische Abtastvorrichtung außerdem den Istwert für einen Spurregler und den Istwert für den Fokusregler. Der Spurregler liefert ein Spurfehlersignal an die optische Abtastvorrichtung, um den Lichtstrahl entlang den Datenspuren der CD-Platte zu führen. Der Fokusregler erzeugt ein Fokusfehlersignal für die optische Abtastvorrichtung, um den Lichtstrahl mittels der Objektivlinse auf die Platte zu fokussieren.

Die WO90/13895, die zur Abgrenzung des Standes der Technik in Anspruch 1 verwendet wird, beschreibt die Montage eines CD-Spielers in einem Fahrzeug. Zur Reduzierung von Erschütterungen wird das CD-Laufwerk über Entkoppelungselastizitäten befestigt. Das gekoppelte Schwingungssystem, bestehend aus Entkoppelungselastizitäten und effektiver Laufwerksmasse wird so ausgelegt, dass bei einem vorgegebenen Erschütterungsspektrum eine bestimmte Abtastsicherheit erreicht wird.

Vorteile der Erfindung

Das erfindungsgemäße Verfahren mit den Merkmalen des Hauptanspruchs hat demgegenüber den Vorteil, daß durch die Anpassung des mechanischen Schwingverhaltens an die Möglichkeiten des jeweiligen Regelkreises und die Unterdrückung von Amplituden, die einen vorgegebenen Wert überschreiten, Federungs- und Dämpfungsmittel eingespart werden können, da die Regelvorrichtungen auftretende Erschütterungen des Gehäuses besser ausgleichen können. Auf diese Weise werden Herstellungs- und Montagekosten eingespart und der Platzbedarf und das Gewicht verringert.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß die Massen, die Federkonstanten und die Dämpfungswerte der Abtastvorrichtung, des Aufzeichnungsträgers, des Grundträgers und des mindestens einen Gehäuses so gewählt werden, daß die Frequenzen, bei denen die Amplituden der Relativbewegung des Aufzeichnungsträgers in Bezug auf die Abtastvorrichtung und die auf die Abtastvorrichtung wirkenden Beschleunigungen maximal sind, einen Wert von etwa 60Hz überschreiten. Auf diese Weise liegen die Frequenzen, bei denen die Amplituden der Relativbewegung des Aufzeichnungsträgers in Bezug auf die Abtastvorrichtung und die auf die Abtastvorrichtung wirkenden Beschleunigungen maximal sind, außerhalb eines Bereichs von 10Hz bis 30Hz, in dem die spektrale Dichte des Erschütterungsspektrums bei Kraftfahrzeugen maximal ist. Somit werden die Auswirkungen von auf das Kraftfahrzeug einwirkenden Erschütterungen auf die genannten Amplituden und Beschleunigungen erheblich reduziert.

Weiterhin ist es vorteilhaft, die Zeitkonstanten eines Differentiators im jeweiligen Regelkreis so zu wählen, daß die Breite des jeweiligen Frequenzbandes für die Regelung an den Frequenzbereich mit den Maximalwerten der Amplituden angepaßt ist und die vorgegebene Stabilitätsreserve eingehalten wird. Auf diese Weise können auch die Regelkreise auf den gekoppelten mechanischen Schwinger abgestimmt werden, wodurch ein verbesserter Widerstand gegen Erschütterungen ermöglicht wird.

Besonders vorteilhaft ist auch die Verwendung eines Integrators im jeweiligen Regelkreis, dessen Zeitkonstanten so gewählt werden, daß die Verstärkung in dem jeweiligen Frequenzband für die Regelung auf einen ersten vorgegebenen Wert erhöht wird und die vorgegebene Stabilitätsreserve eingehalten wird. Auf diese Weise kann die jeweilige Regelabweichung vor allem im niederfrequenten Bereich verringert werden. Da das Erschütterungsspektrum bei niederen Frequenzen besonders hohe Amplituden aufweist, ergibt sich damit gerade in diesem Bereich eine starke Verbesserung des Widerstandes gegen die Erschütterungen.

Vorteilhaft ist auch die Verwendung eines Proportiorialverstärkars im jeweiligen Regelkreis, mit dem eine Erhöhung der Verstärkung und der Bandbreite des Frequenzbandes für die Regelung auf jeweils einen zweiten vorgegebenen Wert durchgeführt wird. Auf diese Weise wird die Anpassung der Regelkreise an den gekoppelten mechanischen Schwinger weiter verbessert und die Regelabweichung weiter verringert, so daß sich wiederum ein verbesserter Widerstand gegen die Erschütterungen ergibt.

Durch Anhebung der Verstärkung an den Stellen im jeweiligen Frequenzband für die Regelung, an denen die Auswirkungen der Erschütterungen auf die Bewegung des Aufzeichnungsträgers in Bezug auf die Abtastvorrichtung maximal sind, wird die Regelabweichung in vorteilhafter Weise mittels eines zusätzlichen Verstärkers gezielt weiter verringert und somit der Widerstand gegen die Erschütterungen weiter vergrößert.

Besonders vorteilhaft ist es auch, bei der Montage des gekoppelten Schwingers einen vorgegebenen Frequenzwert von der Eigenfrequenz des Grundträgers und/oder der Eigenfrequenz des mindestens einen Gehäuses nicht unterschreiten zu lassen. Auf diese Weise läßt sich der für die Schwingungen des Grundträgers im mindestens einen Gehäuse erforderliche Raum verringern, da die Schwingamplitude des Grundträgers kleiner wird. Daher sind auch keine speziellen Dämpfungsmittel für die Dämpfung des Grundträgers im mindestens einen Gehäuse mehr nötig. Somit werden Kosten, Aufwand, Platz und Gewicht eingespart.

Ein weiterer Vorteil ergibt sich durch die Wahl der Eigenfrequenz von Komponenten des gekoppelten mechanischen Schwingers oberhalb von 60Hz. Auf diese Weise lassen sich die Frequenzen, bei denen die Amplituden der Relativbewegung des Aufzeichnungsträgers in Bezug auf die Abtastvorrichtung und die auf die Abtastvorrichtung wirkenden Beschleunigungen maximal sind, besonders einfach in einen Bereich legen, der außerhalb der maximalen spektralen Dichte des Erschütterungsspektrums liegt.

Ein weiterer Vorteil besteht darin, daß ein jeweils vorgegebener Wert von den Verstärkungsfaktoren der Regelkreise in einem Frequenzbereich maximaler spektraler Dichte des Erschütterungsspektrums nicht unterschritten wird, wobei der Wert so vorgegeben wird, daß eine vorgegebene Regelgenauigkeit der Regelkreise eingehalten wird. Auf diese Weise lassen sich Positionsfehler beim Abtasten des Aufzeichnungsträgers, die aufgrund von Erschütterungen des Kraftfahrzeugs im Bereich der maximalen spektralen Dichte des Erschütterungsspektrums zwischen 10Hz und 30Hz auftreten, besser durch die Regelkreise kompensieren.

Besonders vorteilhaft ist die Wahl der Drehgeschwindigkeit des Aufzeichnungsträgers so, daß die Frequenzen von Störsignalen, die aufgrund von Defekten des Aufzeichnungsträgers entstehen, in einem Frequenzbereich liegen, in dem eine vorgegebene Dämpfung durch den jeweiligen Regelkreis nicht unterschritten wird. Auf diese Weise ist es möglich, die Fehlertoleranz des Lesegerätes gegenüber Defekten des Aufzeichnungsträgers zu erhöhen.

Besonders vorteilhaft ist es, den Aufzeichnungsträger so zwischen eine erste und eine zweite Platte einzuspannen, daß seine Eigenfrequenz innerhalb eines vorgegebenen Bereichs liegt, wobei sich eine glockenförmige Einspannung des Aufzeichnungsträgers als besonders günstig erwiesen hat. Auf diese Weise lassen sich die durch die Erschütterung des mindestens einen Gehäuses bedingten Bewegungen des Aufzeichnungsträgers in Bezug auf die Abtastvorrichtung besonders gering halten. Somit wird der Widerstand gegen Erschütterungen weiter verbessert.

Vorteilhaft ist auch die Verwendung eines dämpfenden, senkrecht zur Plattenebene biegsamen Materials für die erste Platte. Dadurch wird die Amplitude der Schwingung des zwischen die erste und die zweite Platte eingespannten Aufzeichnungsträgers verringert, so daß die Positionsregelung der Abtastvorrichtung erleichtert wird.

Zeichnung

Ein Ausführungsbeispiel der Erfindung ist in der Zeichnung dargestellt und in der nachfolgenden Beschreibung näher erläutert. Es zeigen

Figur 1       einen Spurregelkreis,
Figur 2       einen Fokusregelkreis,
Figur 3       ein Erschütterungsspektrum,
Figur 4       ein CD-Laufwerk in einem Autoradiogehäuse,
Figur 5       das Modell eines gekoppelten mechanischen Schwingers,
Figur 6       ein Diagramm zur Darstellung des Einflusses von Erschütterungen auf die Bewegung des Aufzeichnungsträgers über der Frequenz,
Figur 7       die Übertragungsfunktion eines zusätzlichen Verstärker nach Betrag und Phase,
Figur 8       das Black-Diagramm der Übertragungsfunktion des Spurregelkreises,
Figur 9       das Black-Diagramm der Übertragungsfunktion des Fokusregelkreises
Figur 10       die Befestigung eines Aufzeichnungsträgers zwischen zwei Platten und
Figur 11       das Blockschaltbild eines PID-Reglers.

Beschreibung des Ausführungsbeispiels

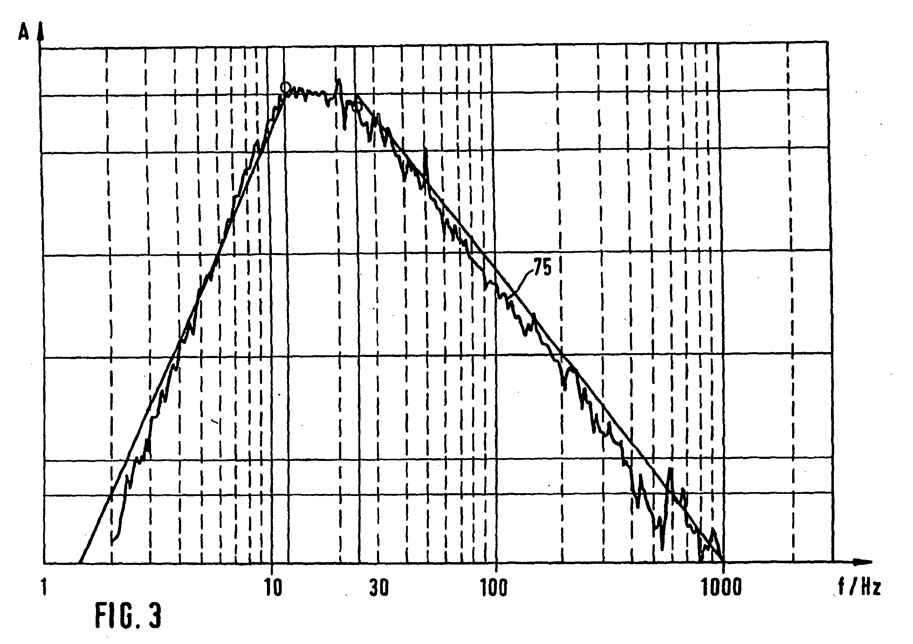

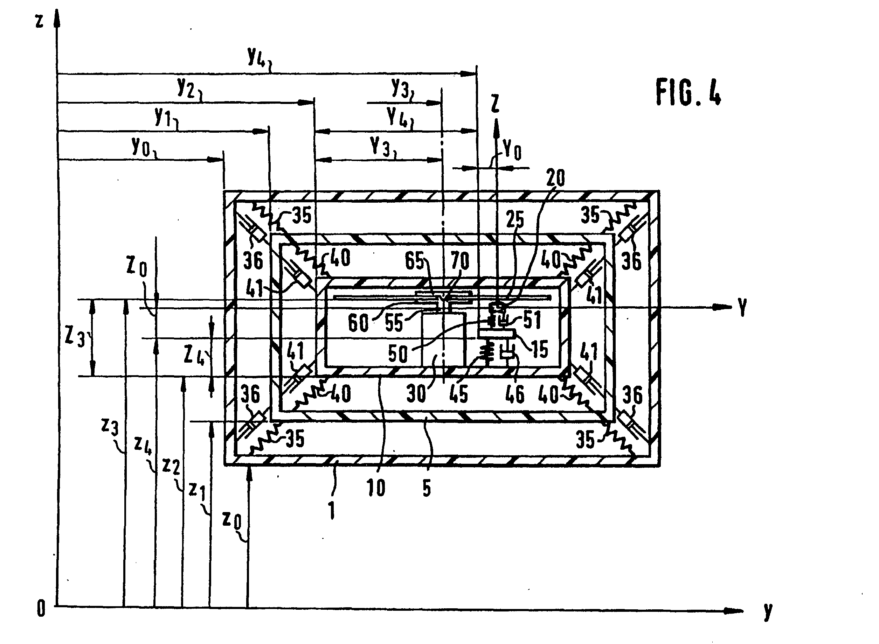

In Figur 4 ist der rechteckige Querschnitt eines Gehäuses 5 eines Compact-Disc-Laufwerks dargestellt, das in einem weiteren Gehäuse 1, beispielsweise eines Autoradios mit rechteckigem Querschnitt befestigt ist. Statt eines Compact-Disc-Laufwerks kann auch ein anderes Laufwerk, beispielsweise ein magneto-optisches Laufwerk oder ein DVD-Laufwerk (digital video disc) vorgesehen sein. Das Laufwerk kann auch ohne eigenes Gehäuse 5 direkt im weiteren Gehäuse 1 angeordnet sein. Als Befestigungsmittel sind dabei vier Federn 35 und vier Dämpfer 36 vorgesehen, die jeweils eine Außenkante des Gehäuses 5 des Compact-Disc-Laufwerks mit der nächstliegenden Innenkante des Gehäuses 1 des Autoradios verbinden. Auf gleiche Weise ist über vier Federn 40 und vier Dämpfer 41 ein im Querschnitt rechteckförmiger Grundträger 10 im Gehäuse 5 des Compact-Disc-Laufwerks befestigt. Ein Compact-Disc-Motor 30 ist mit dem Grundträger 10 verbunden und treibt über eine Achse 55 einen als Compact-Disc ausgebildeten Aufzeichnungsträger 25 an, der zwischen eine erste mit der Achse 55 verbundene Platte 60 und eine zweite Platte 65 eingespannt ist. Dabei weist die erste Platte 60 einen achssymmetrischen Vorsprung 70 zur Zentrierung der Compact-Disc 25 auf, wobei der Vorsprung 70 in einen mit dem Vorsprung 70 korrespondierenden Durchbruch der Compact-Disc 25 zur Zentrierung der Compact-Disc 25 mit der Achse 55 greift. Zum Einspannen der Compact-Disc 25 ist die zweite Platte 65 mit der ersten Platte 60 über den Vorsprung 70 verbunden. Eine Abtastvorrichtung 15, 20 besteht aus einem Lesekopf 15, der über eine Feder 45 und über einen Dämpfer 46 mit dem Grundträger 10 verbunden ist, und einem Objektiv 20, das über eine Feder 50 und einen Dämpfer 51 mit dem Lesekopf 15 verbunden ist. Zum Lesen von Daten auf der durch den Motor 30 angetriebenen rotierenden Compact-Disc 25 wird von der Abtastvorrichtung 15, 20 über das Objektiv 20 ein Lichtstrahl auf die Compact-Disc 25 gerichtet, der dazu dient, die auf der Compact-Disc 25 aufgebrachten Datenspuren abzutasten, um so die auf der Compact-Disc 25 aufgebrachten Informationen zu erfassen. Zur Vermeidung von Lesefehlern ist es dabei besonders wichtig, daß der Lichtstrahl entlang den Datenspuren geführt und auf die Compact-Disc 25 fokussiert wird. Das in ein Kraftfahrzeug eingebaute Gehäuse 1 des Autoradios ist zusammen mit dem darin enthaltenen Compact-Disc-Laufwerk verschiedenen Erschütterungen ausgesetzt. Beschleunigungen, deren spektrale Dichte gemessen werden kann, wirken auf das Gehäuse 1 des Autoradios ein. Die Messung des Erschütterungsspektrums wurde bei verschiedenen Kraftfahrzeugen und unter verschiedenen Straßenzuständen gemessen. Ein typisches Erschütterungsspektrum 75 ist in Figur 3 dargestellt und zeigt die spektrale Dichte A der Beschleunigungen in Abhängigkeit von der Frequenz f. Die spektrale Dichte ist maximal zwischen 10Hz und 30Hz. In dem Compact-Disc-Laufwerk wird die Compact-Disc 25 über das Objektiv 20 gelesen, wobei die Position des Objektivs 20 von zwei Positionsregelkreisen nachgeführt wird. Dabei muß ein Spurregelkreis die Position der Objektivachse in Bezug zur gelesenen Spur auf der Compact-Disc 25 in der Regel mit einer Genauigkeit von +/-0,2μm aufrecht erhalten. Ein Fokusregelkreis muß den Abstand des Objektivs zur metallischen Oberfläche der Compact-Disc 25 mit einer Genauigkeit von +/-2μm aufrechterhalten. In dem Frequenzbereich maximaler spektraler Dichte des Erschütterungsspektrums 75 ist es daher zur Einhaltung der genannten Regelgenauigkeit erforderlich, daß die Verstärkungsfaktoren der beiden Regelkreise genügend groß gewählt werden. Da das Gehäuse 1 des Autoradios den aus dem Erschütterungsspektrum 75 resultierenden Erschütterungen unterworfen ist, erfahren die Compact-Disc 25, der Lesekopf 15 und sein Objektiv 20 im Verhältnis zueinander Positionsveränderungen, die weitgehend durch die beiden Regelkreise korrigiert werden. Jeder Regelkreis ist dennoch einem Positionsfehler unterworfen, der von den Amplituden und den Beschleunigungsfrequenzen des Erschütterungsspektrums abhängt. Bei jeder Frequenz und für jeden Regelkreis gibt es einen maximalen Beschleunigungswert, oberhalb dessen der Positionsfehler so groß wird, daß sich beim Abtasten der Compact-Disc 25 ein Lesefehler ergibt. Das Objektiv 20 des Lesekopfs 15 verliert die gerade gelesene Spur, so daß es zu einer Wiedergabeunterbrechung kommt. Bei Verwendung von Compact-Discs 25 als Informationsträger, kann es auch zu einer fehlerhaft detektierten digitalen Information kommen.

Außerdem weisen alle Compact-Discs 25 eine gewisse Anzahl von Defekten, wie Kratzer, Fingerabdrücke, Zonen nicht lesbarer oder fehlende Information, usw., auf. Solange das Objektiv 20 der Spur mit der erforderlichen Genauigkeit folgt, ermöglicht die digitale Verarbeitung der auf der Compact-Disc 25 gelesenen Information die Korrektur dieser Defekte durch Ausnutzung von Redundanz. Dennoch sind die zur Messung der Objektivposition in Bezug zur Compact-Disc 25 vorgesehenen optoelektronischen Aufnehmer ebenfalls diesen Defekten unterworfen, die die Reflexion des Lichtstrahls beeinflussen. Eine falsche Positionsinformation wird dann an die Regelkreise geliefert und das Objektiv 20 verliert die Spur. Daher ist es erforderlich, daß das Compact-Disc-Laufwerk in höchstmöglichem Maße Defekte der Compact-Disc 25 toleriert. Diese beiden Bedingungen der Widerstandsfähigkeit gegen Erschütterungen des Erschütterungsspektrums und der Toleranz gegenüber Defekten der Compact-Disc 25 können gleichzeitig erfüllt werden. Dazu sind folgende Maßnahmen vorgesehen:

1. Bei der Auswahl des Lesekopfes 15 werden die Eigenschaften der mechanischen Schwingungsmoden der elastischen Aufhängung seines Objektivs 20 berücksichtigt. Die Auswahl dieser Moden bestimmt die Empfindlichkeit gegenüber den Schwingungen des Lesekopfes 15 und die Möglichkeit breitbandige Positionsregelungen zu verwirklichen. So wird ein Lesekopf 15 verwendet, bei dem oberhalb seiner Eigenfrequenz nur unwesentliche mechanische Schwingungsmoden der elastischen Aufhängung des Objektivs 20 auftreten.

2. Die Kette der mechanischen Systeme, die vom Gehäuse 1 des Autoradios bis zum Lesekopf 15 und zur Compact-Disc 25 gehen, besitzt optimale Eigenschaften zur Filterung der Beschleunigung, um den Lesekopf 15 und die Compact-Disc 25 bestmöglich zu isolieren und ihre relativen Positionsänderungen zu minimieren.

3. Die Korrekturnetzwerke der beiden Regelkreise für die Objektivposition des Lesekopfes 15 werden an die Kette der mechanischen Systeme und an das Erschütterungsspektrum angepaßt.

Die Compact-Disc 25 ist mit einer verhältnismäßig großen Kraft von beispielsweise 1,5N zwischen die erste und die zweite Platte 60 und 65, die von dem Motor 30 zur Rotation gebracht werden, eingespannt, wobei sich die Einspannungskräfte der Compact-Disc 25 am Außenrand der beiden Platten 60 und 65 auf die Compact-Disc 25 auswirken und beide Platten 60 und 65 den gleichen Radius haben. Der Lesekopf 15, dessen Befestigung auf dem Grundträger 10 in Figur 4 nur schematisch über die Feder 45 und den Dämpfer 46 dargestellt ist, ist in der Realität auf einen Transportmechanismus montiert, der den Lesekopf 15 entlang des Radius der Compact-Disc 25 bewegt. Der auf den Grundträger 10 montierte Transportmechanismus umfaßt i. a. ein Schrauben-Muttern-System und ein Führungssystem. Alle mechanischen Spiele dieses Transportmechanismus werden in diesem Beispiel durch Kräfte zwischen 1N und 2N unterdrückt. Wenn das Gehäuse 1 des Autoradios aus dem Erschütterungsspektrum resultierenden Erschütterungen unterworfen wird, werden die Beschleunigungen auf den Lesekopf 15 und die Compact-Disc 25 über die ganze Kette der mechanischen Systeme übertragen, verstärkt oder gedämpft gemäß den Schwingungsmoden der durchlaufenen Systeme. Die verschiedenen Schwingungsmoden sind untereinander gekoppelt, so daß die verschiedenen in Figur 4 dargestellten mechanischen Systeme zusammen einen gekoppelten mechanischen Schwinger bilden. Die übertragenen Beschleunigungen wirken gleichzeitig auf die Compact-Disc 25, den Lesekopf 15 und das Objektiv 20.

In Figur 4 ist der Querschnitt des gekoppelten mechanischen Schwingers in der y-z-Ebene dargestellt. Dabei stellt die y-Richtung die Radialrichtung dar, d. h. die Richtung, in der sich die Abtastvorrichtung 15, 20 vom Compact-Disc-Motor 30 radial an den äußeren Rand der Compact-Disc 25 zur Verfolgung der Spur bewegt. In dieser Richtung wird die Spurregelung wirksam. Die z-Richtung ist die Fokussierrichtung, die senkrecht zur Ebene der Compact-Disc 25 verläuft und damit auch senkrecht zur Radialrichtung ist. In z-Richtung findet daher die Fokusregelung statt. Bei Erschütterungen des Autoradio-Gehäuses 1 kann es natürlich auch zu Positionsfehlern in x-Richtung des Lichtstrahls in Bezug zur entsprechenden Spur auf der Compact-Disc 25 kommen. Im Gegensatz zur Radialabweichung von der Spur in y-Richtung handelt es sich bei der Abweichung in x-Richtung um eine Tangentialabweichung von der Spur, die zu Jitter führt. In Tangentialrichtung ist jedoch in der Regel kein Regelkreis vorgesehen, so daß die Verringerung bzw. Vermeidung von Jitter durch eine entsprechend stabile und in Tangentialrichtung gedämpfte Montage erfolgen muß.

In Figur 4 sind ausgehend von dem y-z-Koordinatensystem mehrere Positionsangaben eingetragen. Dabei sind $y_0$, $z_0$ die Positionen des Gehäuses 1 des Autoradios und $\ddot{y}_0$, $\ddot{z}_0$ sind dann die Beschleunigungen, die das Gehäuse 1 des Autoradios erfährt. $y_1$, $z_1$ sind die Positionen des Gehäuses 5 des Compact-Disc-Laufwerks und entsprechend $\ddot{y}_1$, $\ddot{z}_1$ die Beschleunigungen, die es erfährt. $y_2$, $z_2$ sind die Positionen des Grundträgers 10 und $\ddot{y}_2$, $\ddot{z}_2$ die Beschleunigungen, die er erfährt. $y_3$ ist die Position der Compact-Disc-Achse und $z_3$ ist die Position der Spuren der Compact-Disc 25 in der Nähe ihres äußeren Randes. Der Abstand zwischen dem Mittelpunkt der Compact-Disc 25 und dem Grundträger ist konstruktionsbedingt konstant. $y_4$ und $z_4$ sind die Positionen des Lesekopfes 15. $Y_3$ und $Z_3$ sind die Abstände des Grundträgers 10 von der Compact-Disc 25. $Y_4$ und $Z_4$ sind die Abstände des Lesekopfes 15 vom Grundträger 10. $Y_0$ und $Z_0$ sind die Abstände des Objektivs 20 vom Lesekopf 15, auf den die Referenzfotodioden montiert sind, die diese Abstände messen. Die Compact-Disc 25 und der Lesekopf 15 sind auf den Grundträger 10 montiert und da dieser die Beschleunigung $\ddot{y}_2$ und $\ddot{z}_2$ erfährt, bewegen sie sich relativ zum Grundträger 10 und relativ zueinander.

Die Compact-Disc 25 ist gemäß Figur 4 zwischen die beiden Platten 60 und 65 eingespannt, wobei die Radien der beiden Platten 60 und 65 kleiner als der Radius der Compact-Disc 25 sind. Wenn nun der Grundträger 10 eine Bewegung in z-Richtung mit einer Beschleunigung $\ddot{z}_2$ durchführt, so erfährt der Mittelpunkt der Compact-Disc 25 dieselbe Beschleunigung. Der äußere Rand der Compact-Disc 25 weist eine davon verschiedene Bewegung mit der Beschleunigung $\ddot{z}_3$ auf, da die Compact-Disc 25 biegsam ist und durch die sich auf die verschiedenen Massenteile auswirkenden Inertialkräfte Beugungsmomente erzeugt werden. Die deformierte Compact-Disc 25 ist achsensymmetrisch und weist eine Glockenform auf. Die Compact-Disc 25 verhält sich wie ein Oszillator, dessen Eigenfrequenz $f_{3z}$ ist und dessen Dämpfungskoeffizient $a_{3z}$ ist.

In Bezug zum Grundträger 10 ist die Amplitude der Relativbewegung in z-Richtung im Mittelpunkt der Compact-Disc 25 Null und am äußeren Rand maximal. Die Eigenfrequenz $f_{3z}$ hängt von den Durchmessern der zwei Platten 60 und 65, zwischen die die Compact-Disc 25 eingespannt ist, und den Abmessungen und dem Material der Compact-Disc 25 ab. Wenn die zwei Platten 60 und 65 jeweils einen Durchmesser von 30mm haben, so beträgt die Eigenfrequenz in der Regel 100Hz für Compact-Discs 25 mit 12 cm Durchmesser, wobei sie toleranzbedingt zwischen 90Hz und 110Hz liegt. Generell ist eine Eigenfrequenz oberhalb von 60Hz für die Compact-Disc 25 geeignet, das Maximum der Amplituden der Relativbewegung der Compact-Disc 25 in Bezug auf die Abtastvorrichtung 15, 20 in einen Frequenzbereich oberhalb der maximalen spektralen Dichte des Erschütterungsspektrums 75 zu legen, und dadurch dessen Einfluß auf diese Amplituden erheblich zu reduzieren. Der gemessene Dämpfungskoeffizient beträgt $a_{3z}$=0,02. Die Compact-Disc 25 stellt daher einen sehr resonanten Oszillator dar. Die Schwingungen der Compact-Disc 25 werden durch die von dem Grundträger 10 erfahrenen Beschleunigungen angeregt und die sich ergebenden Amplituden hängen vom Erschütterungsspektrum 75 ab. Die am äußeren Rand der Compact-Disc 25 durchgeführten Messungen zeigen, daß diese Amplituden nicht selten +/-300μm erreichen. Das Objektiv 20 des Lesekopfes 15, das durch die Fokusregelung in z-Richtung positioniert wird, muß der Bewegung der Compact-Disc 25 in z-Richtung jedoch mit einer Genauigkeit von +/-2μm folgen.

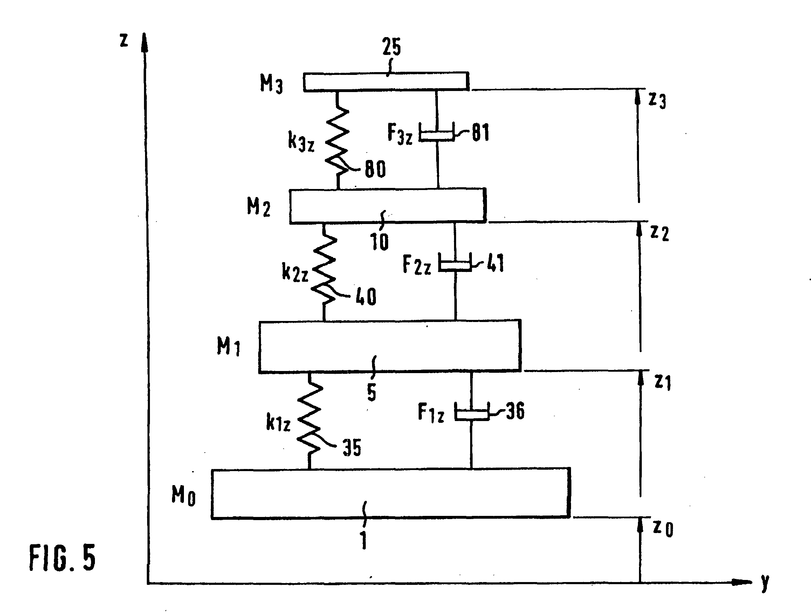

Zur Beschreibung der Relativbewegung der Compact-Disc 25 in Bezug auf den Grundträger 10 und der Einwirkung der Beschleunigung $\ddot{z}_0$ des Gehäuses 1 des Autoradios ist in Figur 5 ein System von drei gekoppelten Schwingern in der y-z-Ebene dargestellt. In diesem Modell weist das Gehäuse 1 des Autoradios die Masse $M_0$ auf und ist über die Feder 35 mit der Federkonstanten $k_{1z}$ und dem Dämpfer 36 mit dem Dämpfungswert $F_{1z}$ mit dem Gehäuse 5 des Compact-Disc-Laufwerks verbunden, das die Masse $M_1$ aufweist. Das Gehäuse 5 des Compact-Disc-Laufwerks wiederum ist über die Feder 40 mit der Federkonstanten $k_{2z}$ und dem Dämpfer 41 mit dem Dämpfungswert $F_{2z}$ mit dem Grundträger 10 verbunden, der die Masse $M_2$ aufweist. Die Befestigung der Compact-Disc 25 mit dem Grundträger 10 ist in diesem Modell durch eine Feder 80 mit der Federkonstanten $k_{3z}$ und dem Dämpfer 81 mit dem Dämpfungswert $F_{3z}$ beschrieben, wobei die Masse $M_3$ die bewegte Masse der Compact-Disc 25 darstellt. Die Positionen in z-Richtung der vier dargestellten Massen sind analog zu Figur 4 mit $z_0$, $z_1$, $z_2$ und $z_3$ dargestellt. Es ergeben sich die drei folgenden Differentialgleichungen, die die Bewegungen der drei gekoppelten Schwinger mit den Massen $M_1$, $M_2$ und $M_3$ dieses Systems beschreiben, wenn das Gehäuse 1 des Autoradios eine Beschleunigung $\ddot{z}_0$ in z-Richtung erfährt:

$$M_1\ddot{z}_1 + k_{1z}(z_1 - z_0) + F_{1z}(\dot{z}_1 - \dot{z}_0) + k_{2z}(z_1 - z_2) + F_{2z}(\dot{z}_1 - \dot{z}_1) = 0$$

$$M_2\ddot{z}_2 + k_{2z}(z_2 - z_1) + F_{2z}(\dot{z}_2 - \dot{z}_1) + k_{3z}(z_2 - z_3) + F_{3z}(\dot{z}_2 - \dot{z}_3) = 0$$

$$M_3\ddot{z}_3 + k_{3z}(z_3 - z_2) + F_{3z}(\dot{z}_3 - \dot{z}_2) = 0$$

Die Schwingungen der Compact-Disc 25 mit der bewegten Masse $M_3$ beziehen sich dabei auf den äußeren Rand der Compact-Disc 25, an dem die größte Schwingamplitude zu beobachten ist. Von Interesse ist dabei der Abstand $(z_3-z_2)/\ddot{z}_0$ des äußeren Randes der Compact-Disc 25 in Bezug zum Grundträger 10 für eine Beschleunigung $\ddot{z}_0$ des Gehäuses 1 des Autoradios und das Verhältnis $\ddot{z}_2 \cdot \ddot{z}_0$ die Beschleunigung als Grundträger 10 in Bezug auf die Beschleunigung des Gehäuses 1 des Autoradios. Durch die Wahl der Massen, der Federkonstanten und der Dämpfungswerte werden auch die Eigenfrequenzen und Dämpfungskonstanten der gekoppelten mechanischen Schwinger bestimmt. So ist die Eigenfrequenz $f_i^2 = k_i/(4\pi^2 M_i)$ und die Dämpfungskonstante $a_i = F_i/(4\pi f_i M_i)$, wobei $i=1,2,3$ ist. Dies gilt sowohl für die Bewegung in y- als auch in z-Richtung, wobei die bewegten Massen, die Federkonstanten und die Dämpfungswerte in Abhängigkeit der Bewegungsrichtung unterschiedlich sein können. Der in Figur 5 beschriebene Fall gilt für die Bewegungen in z-Richtung, ist aber in analoger Betrachtungsweise auch für die Bewegung in y-Richtung anwendbar. Die Wahl der genannten Parameter bestimmt für ein gegebenes Erschütterungsspektrum 75 die von der Compact-Disc 25 sich ergebenden Amplituden in Bezug zum Grundträger 10 und die Beschleunigungen des Grundträgers 10 jeweils bezogen auf die Beschleunigung des Gehäuses 1 des Autoradios in Abhängigkeit der Frequenz, d. h. also in z-Richtung die Störgrößen der Fokusregelung.

Der Lesekopf 15 mit dem Objektiv 20 ist auf dem Grundträger 10 über ein Führungssystem mit möglichst geringem mechanischen Spiel montiert und bewegt sich relativ in Bezug auf den Grundträger 10 unter dem Einfluß von Beschleunigungen $\ddot{y}_0$ und $\ddot{z}_0$ des Gehäuses 1 des Autoradios in y- und z- Richtung. Diese Bewegung kann ebenfalls mit Hilfe von drei gekoppelten Schwingern modelliert werden. Die Relativbewegungen der Compact-Disc 25 und des Lesekopfes 15 in Bezug zum Grundträger 10 ermöglichen es, die auf die beiden Positionierregelkreise einwirkenden Störgrößen zu beschreiben, die sich aufgrund der Erschütterung des Gehäuses 1 des Autoradios ergeben.

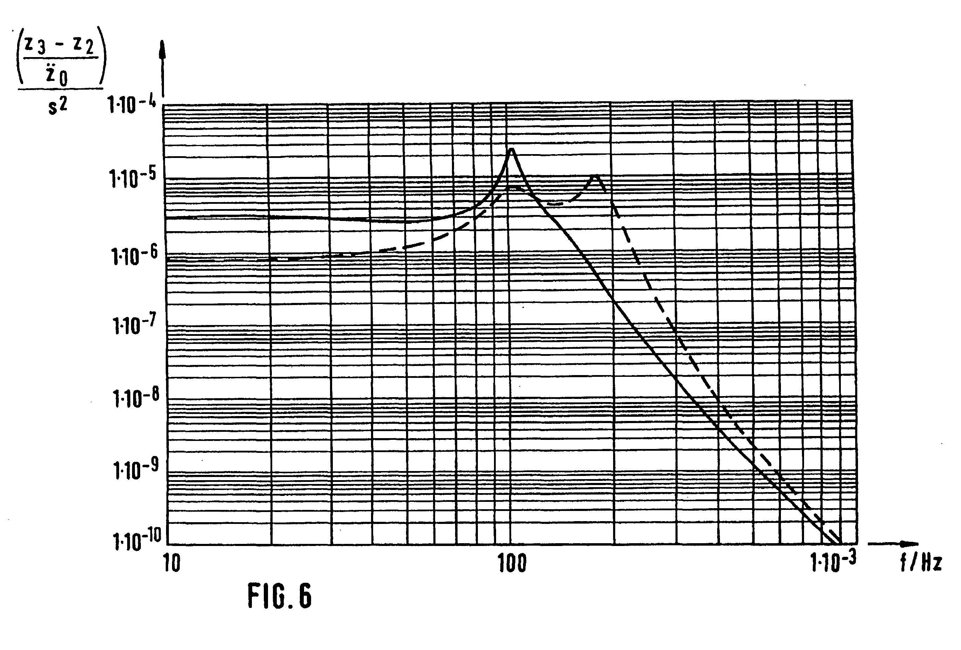

In Figur 6 ist das Verhältnis $(z_3-z_2)/\ddot{z}_0$ in $s^2$ über der Frequenz f in Hz aufgetragen. Dabei sind zwei Kurven dargestellt, die sich durch Berechnung aus den oben angegebenen Differentialgleichungen bei verschiedenen Parameterwerten ergeben. Für beide Kurven wurden die gleichen Massen gewählt, nämlich $M_1=0,5kg$, $M_2=0,15kg$ und $M_3=0,01kg$. Für die durchgezogene Kurve wurden außerdem die Eigenfrequenzen $f_{1z}=150Hz$, $f_{2z}=20Hz$ und $f_{3z}=100Hz$ gewählt, und für die Dämpfungskonstanten wurden die Werte $a_{1z}=0,15$, $a_{2z}=1$ und $a_{3z}=0,02$ gewählt. Für die Kurve mit unterbrochener Linienführung wurde für die Eigenfrequenzen $f_{1z}=130Hz$, $f_{2z}=160Hz$ und $f_{3z}=180Hz$ gewählt und für die Dämpfungskonstanten $a_{1z}=0,15$, $a_{2z}=0,15$ und $a_{3z}=0,02$. Dabei stellt die Kurve mit durchgezogenem Strich eine Lösung mit Dämpfern dar, bei der die Compact-Disc 25 bei 100Hz oszilliert. Die Kurve mit unterbrochener Linienführung stellt eine Lösung ohne Dämpfer dar, bei der die Compact-Disc 25 bei einer Frequenz von 180Hz oszilliert. Bei der Kurve mit unterbrochener Linienführung ist die relative Abweichung des äußeren Randes der Compact-Disc 25 vom Grundträger 10 bei der Frequenz von ca. 100Hz, wo die Kurve mit durchgezogener Linienführung ein Maximum hat, dreimal kleiner als bei der durchgezogenen Kurve. Das Amplitudenmaximum liegt nun bei 180Hz für die Kurve mit unterbrochener Linienführung, weist dort den Wert $10^{-5}s^2$ auf und ist somit kleiner als das Maximum der Kurve mit durchgezogener Linienführung bei 100Hz von $2{,}5*10^{-5}s^2$. Bei der Frequenz 180Hz sind jedoch gemäß Figur 3 die Amplituden der im Erschütterungsspektrum 75 dargestellten Beschleunigungen geringer. Dasselbe gilt auch analog für die auf die Abtastvorrichtung 15, 20 wirkenden Beschleunigungen und die Relativbewegungen des Lesekopfes 15 in Bezug zum Grundträger 10 sowie in y- und z-Richtung. Ferner können die Maximalwerte der Amplituden in dem Frequenzband auf einen vorgegebenen Wert begrenzt werden, der gemäß Figur 6 $10^{-5}s^2$ für die Kurven mit unterbrochener Linienführung beträgt. Aus Figur 6 erkennt man also, daß man durch Variation der Parameter M, k und F sowohl die Amplituden als auch das Frequenzband der maximal auftretenden Störungen beeinflussen kann. Auf diese Weise lassen sich durch geeignete Wahl der Massen, der Federkonstanten und der Dämpfungswerte bei der Montage der Abtastvorrichtung 15, 20, der Compact-Disc 25, des Grundträgers 10, des Gehäuses 5 für das Compact-Disc-Laufwerk und des Gehäuses 1 für das Autoradio zu einem gekoppelten Schwinger die Frequenzen des sich bei Erschütterung des gekoppelten Schwingers ergebenden Erschütterungsspektrums 75 für das Gehäuse 1 des Autoradios, bei denen die Amplituden der Relativbewegung der Compact-Disc 25 in Bezug auf die Abtastvorrichtung 15, 20 und die auf die Abtastvorrichtung 15, 20 wirkenden Beschleunigungen maximal sind, in ein Frequenzband des Fokus- bzw. Spurregelkreises legen, in dem eine Verstärkung durchgeführt und eine vorgegebene Stabilitätsreserve eingehalten wird und die Maximalwerte der Amplituden in dem Frequenzband auf einen vorgegebenen Wert begrenzen. Im beschriebenen Ausführungsbeispiel liegen diese Frequenzen ausgehend von der Betrachtung gemäß Figur 6 bei 100Hz bzw. 180Hz, das heißt oberhalb einem Frequenzwert von 60Hz und damit auch ausreichend oberhalb des Frequenzbereichs maximaler spektraler Dichte im Erschütterungsspektrum 75, so daß der Einfluß des Erschütterungsspektrums 75 auf die genannten Amplituden und Beschleunigungen erheblich reduziert ist.

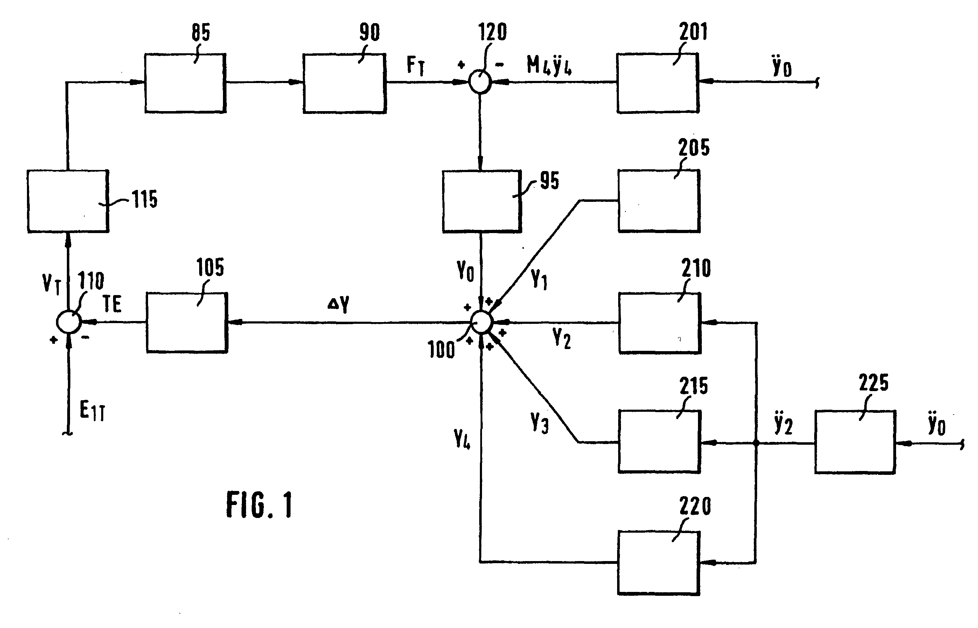

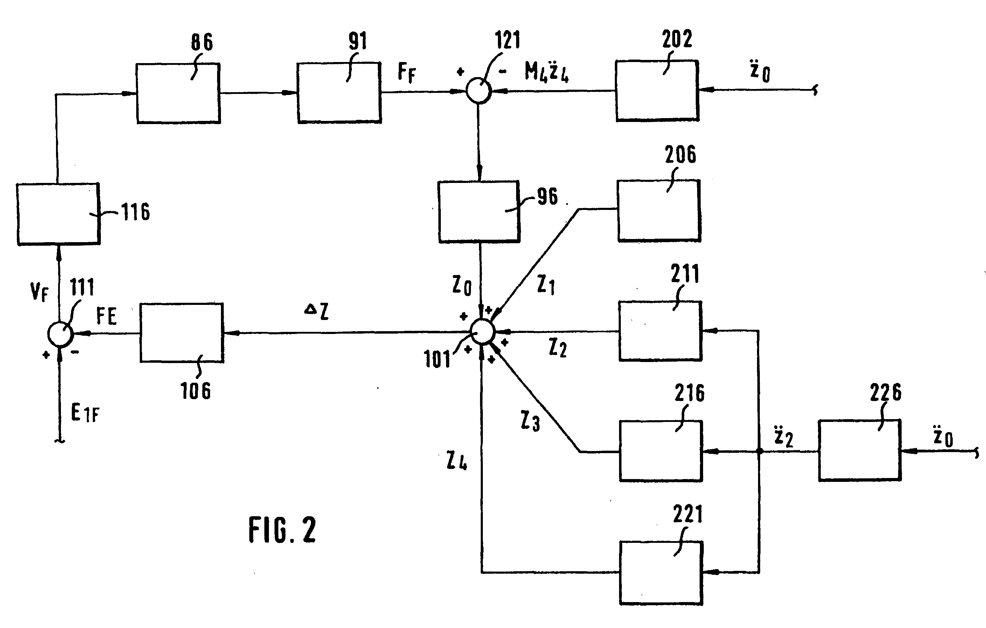

In Figur 1 ist ein Blockschaltbild des Spurregelkreises und in Figur 2 ein Blockschaltbild des Fokusregelkreises dargestellt. Beide Blockschaltbilder sind einander ähnlich und unterscheiden sich nur durch die Parameterwerte der Übertragungsfunktionen, die jeden Block des Blockdiagramms charakterisieren. Die Spurregelschleife enthält einen Leistungsverstärker 85. Mit dem Leistungsverstärker 85 ist ein Aktuator 90 verbunden, der die Regelposition des Objektivs 20 des Lesekopfes 15 in y-Richtung mit einer Kraft $F_T$ einstellt. Dabei ist das Objektiv 20 mit seiner elastischen Aufhängung in Figur 1 mit dem Bezugszeichen 95 gekennzeichnet. Die Position des Objektivs 20 in Bezug zur Compact-Disc 25 wird durch die auf dem Lesekopf 15 montierten Referenzfotodioden gemessen. Durch Krafteinwirkung auf das Objektiv 20 in y-Richtung wird der Abstand $Y_0$ des Objektivs 20 vom Lesekopf 15 verändert. Eine durch die Änderung des Abstandes $Y_0$ herbeigeführte Positionsstörung wird zusammen mit allen Positionsstörgrößen in y-Richtung für die Bewegung des Objektivs 20 in Bezug zur Compact-Disc 25 an einem ersten Summationspunkt 100 addiert. Daraus ergibt sich der Gesamtpositionsfehler $\Delta Y$ der Spurregelung in y-Richtung. Ein Positionsaufnehmer 105 wandelt den Gesamtpositionsfehler $\Delta Y$ in das elektrische Positionsfehlersignal TE um. Dem Positionsfehlersignal TE werden an einem zweiten Summationspunkt 110 parasitäre Signale $E_{1T}$ überlagert, die von Defekten auf der Compact-Disc 25 herrühren und die Positionsbestimmung in y-Richtung stören. Das sich ergebende Signal $V_T$ wird auf ein Korrekturnetzwerk 115 der Spurregelung gegeben. Dabei handelt es sich um einen elektronischen Schaltkreis, dessen Funktion die eines Filters ist, und die die Stabilität und die statische und dynamische Genauigkeit der Regelung gewährleisten muß. Das Ausgangssignal des Korrekturnetzwerkes 115 wird dann auf den Leistungsverstärker 85 gegeben.

Der Fokusregelkreis ist in Figur 2 dargestellt und enthält analog zum Spurregelkreis einen Leistungsverstärker 86, der mit einem Aktuator 91 verbunden ist. Der Aktuator wirkt dabei über die Kraft $F_F$ auf das Objektiv 20 in seiner elastischen Aufhängung, gekennzeichnet durch das Bezugszeichen 96. Eine Änderung des Abstandes $z_0$ des Objektivs 20 vom Lesekopf 15 wird als Positionsstörgröße in z-Richtung an einem ersten Summationspunkt 101 mit allen Positionsstörgrößen in z-Richtung der Bewegung des Objektivs 20 in Bezug auf die Compact-Disc 25 addiert. Der Gesamtpositionsfehler der Fokusregelung in z-Richtung ist dann $\Delta Z$. Ein Positionsaufnehmer 106 wandelt den Gesamtpositionsfehler $\Delta Z$ in ein elektrisches Positionsfehlersignal FE um. Dem Positionsfehlersignal FE werden an einem zweiten Summationspunkt 111 parasitäre Signale $E_{1F}$ überlagert, die von Defekten auf der Compact-Disc 25 herrühren und die Positionsbestimmung in z-Richtung stören. Das resultierende Signal $V_F$ wird auf ein Korrekturnetzwerk 116 der Fokusregelung gegeben. Auch hierbei handelt es sich um einen elektronischen Schaltkreis mit der Funktion eines Filters, der die Stabilität und die statische und dynamische Genauigkeit der Fokusregelung gewährleisten muß. Für einen gegebenen Lesekopf 15 und gegebene mechanische Montagesysteme legen die beiden Korrekturnetzwerke 115 und 116 der beiden Positionsregelkreise sowohl den Widerstand gegen Erschütterungen des Compact-Disc-Laufwerks in einem Autoradio als auch dessen Toleranz gegenüber Defekten der Compact-Disc 25 fest. Jeder Regelkreis kann durch seine Übertragungsfunktion bei geöffnetem Regelkreis definiert werden, die das Produkt aller Übertragungsfunktionen in den entsprechenden Blöcken des jeweiligen Blockschaltbildes gemäß Figur 1 bzw. Figur 2 ist.

Es gibt drei verschiedene Arten von Störgrößen, die den beiden Regelkreisen zugeführt werden. Zunächst sind es Störungen, die sich in Form von Inertialkräften auf das Objektiv 20 des Lesekopfes 15, der die Masse $M_4$ besitzt, auswirken. Sie betragen $M_4\ddot{y}_4$ in y-Richtung und $M_4\ddot{z}_4$ in z-Richtung. Dabei wird die Inertialkraft $M_4\ddot{y}_4$ der Kraft $F_T$ an einem dritten Summationspunkt 120 des Spurregelkreises überlagert und die Inertialkraft $M_4\ddot{z}_4$ wird der Kraft $F_F$ an einem dritten Summationspunkt 121 des Fokusregelkreises überlagert. Die Inertialkräfte rühren dabei von den Beschleunigungen $\ddot{y}_0$ und $\ddot{z}_0$ des Gehäuses 1 des Autoradios auf der Grundlage des Erschütterungsspektrums 75 her. Diese Beschleunigungen werden über die Kette der mechanischen Systeme übertragen. Die Umwandlung der Beschleunigung $\ddot{y}_0$ des Gehäuses 1 des Autoradios in y-Richtung in die Inertialkraft $M_4\ddot{y}_4$ findet in Figur 1 im Block 201 statt, der durch eine entsprechende mechanische Übertragungsfunktion $S_{0y}$ gekennzeichnet ist. Die Umwandlung der Beschleunigung $\ddot{z}_0$ des Gehäuses 1 des Autoradios in z-Richtung in die Inertialkraft $M_4\ddot{z}_4$ findet in Figur 2 in dem mit 202 gekennzeichneten Block statt, der durch die mechanische Übertragungsfunktion $S_{0z}$ gekennzeichnet ist. Der Lesekopf 15 erfährt also die Beschleunigungen $\ddot{y}_4$ und $\ddot{z}_4$.

Die weiteren Positionsstörgrößen ergeben sich aus den Relativbewegungen des Lesekopfes 15 und der Compact-Disc 25 in Bezug zum Grundträger 10. Als Positionsstörgröße des Spurregelkreises ergeben sich zunächst die Veränderungen der radialen Positionen der auf der Compact-Disc 25 gelesenen Spuren in Bezug zum Grundträger 10 während der Rotation der Compact-Disc 25 aufgrund der Exzentrizität der Compact-Disc 25, die als Störgröße $Y_1$ am ersten Summationspunkt 100 addiert wird. Die Exzentrizität der Compact-Disc 25 ist im Blockschaltbild gemäß Figur 1 als Ursache für den Spurpositionsfehler $Y_1$ durch einen Block mit dem Bezugszeichen 205 gekennzeichnet. In z-Richtung ergeben sich Veränderungen der axialen Positionen der gelesenen Spur auf der Compact-Disc 25 in Bezug zum Grundträger 10 während der Rotation der Compact-Disc 25. Diese Veränderungen sind auf einen vertikalen Schlag der Compact-Disc 25 zurückzuführen, und im Blockschaltbild der Figur 2 durch das Bezugszeichen 206 gekennzeichnet. Die sich ergebende Störgröße in z-Richtung $Z_1$ und wird am ersten Summationspunkt 101 den anderen Positionsstörgrößen überlagert. Die durch die Veränderungen $Y_1$ und $Z_1$ hervorgerufenen Störgrößen sind im wesentlichen niederfrequent.

Weiterhin ergeben sich Positionsveränderungen der Compact-Disc 25 aufgrund der Tatsache, daß die Compact-Disc 25 zwischen die zwei Platten 60 und 65 mit einer begrenzten Kraft eingespannt sind. Die Compact-Disc 25 bewegt sich daher sowohl in radialer als auch in axialer, d. h. sowohl in y- als auch in z-Richtung in ihrer Befestigungsvorrichtung. Diese Bewegung der Compact-Disc 25 in y-Richtung ist in Figur 1 durch das Bezugszeichen 210 gekennzeichnet und ergibt eine Positionsabweichung $Y_2$, die am ersten Summationspunkt 100 den anderen Positionsstörgrößen des Spurregelkreises überlagert wird. Entsprechendes gilt für die Positionsveränderung in z-Richtung der Compact-Disc 25, die in Figur 2 mit dem Bezugszeichen 211 gekennzeichnet ist und die Positionsstörgröße $Z_2$ ergibt, die ebenfalls mit den anderen Positionsstörgrößen des Fokusregelkreises am ersten Summationspunkt 101 überlagert wird. Die Positionsstörsignale $Y_2$ und $Z_2$ stellen höherfrequente Störungen dar.

Aufgrund der Befestigung des Compact-Disc-Motors 30 auf dem Grundträger 10 ergeben sich montagebedingte Bewegungen der Compact-Disc 25 in radialer Richtung, die in Figur 1 durch das Bezugszeichen 215 gekennzeichnet sind und zu einer vergleichsweise schwachen Veränderung des Abstandes $Y_3$ zwischen dem Grundträger 10 und der Compact-Disc 25 führen, die ebenfalls am ersten Summationspunkt 100 den anderen Positionsstörgrößen überlagert wird. Die bereits beschriebene Oszillationsbewegung des äußeren Randes der Compact-Disc 25 in Bezug zu ihrem Mittelpunkt und senkrecht zur Ebene der Compact-Disc 25 gemäß einer Glockenform wurde bereits beschrieben und ist in Figur 2 durch das Bezugszeichen 216 gekennzeichnet. Sie führt zu einer Veränderung des Abstandes $Z_3$ des äußeren Randes der Compact-Disc 25 vom Grundträger 10, die ebenfalls den andern Positionsstörgrößen am ersten Summationspunkt 101 überlagert wird.

Schließlich ergeben sich auch Positionsveränderungen des Lesekopfes 15 in Bezug zum Grundträger 10 aufgrund der elastischen Montage des Lesekopfes 15. Der Lesekopf 15 vibriert dabei in Bezug zum Grundträger 10 mit den Eigenfrequenzen $f_{4y}$ in y-Richtung und $f_{4z}$ in z-Richtung bei den Dämpfungskonstanten $a_{4y}$ in y-Richtung und $a_4z$ in z-Richtung. Diese Relativbewegung des Lesekopfes 15 in Bezug zum Grundträger 10 ist in Figur 1 durch das Bezugszeichen 220 gekennzeichnet und ergibt die Veränderung des Abstandes $Y_4$ zwischen dem Grundträger 10 und dem Lesekopf 15, die sich am ersten Summationspunkt 100 den anderen Positionsstörgrößen überlagert. Die entsprechende Bewegung des Lesekopfes 15 in Bezug zum Grundträger 10 in z-Richtung ist in Figur 2 durch das Bezugszeichen 221 gekennzeichnet und ergibt die Veränderungen des Abstandes $Z_4$ zwischen dem Grundträger 10 und dem Lesekopf 15, die sich am ersten Summationspunkt 101 den anderen Positionsstörgrößen in z-Richtung überlagern. Die Positionsstörgrößen $Y_2$, $Y_3$, $Y_4$ und $Z_2$, $Z_3$, $Z_4$ werden durch die Beschleunigungen $\ddot{y}_2$ und $\ddot{z}_2$ des Grundträgers 10 hervorgerufen, die sich aus den Beschleunigungen $\ddot{y}_0$ und $\ddot{z}_0$ des Gehäuses 1 des Autoradios durch Übertragung über die Kette der mechanischen Systeme ergeben. Die entsprechende mechanische Übertragungsfunktion $S_{1y}$ für die Positionsveränderungen in y-Richtung ist in Figur 1 durch das Bezugszeichen 225 gekennzeichnet und die entsprechende mechanische Übertragungsfunktion $S_{1z}$ für die Positionsveränderungen in z-Richtung ist in Figur 2 durch das Bezugszeichen 226 dargestellt. Die sich dabei ergebenden Positionsveränderungen in y- und in z-Richtung liegen bei diesem Beispiel in jeweils einem Frequenzbereich zwischen 2Hz und 500Hz.

Die dritte Kategorie von Störgrößen stellen schließlich die Defekte der Compact-Disc 25 dar. Die daraus resultierenden Störgrößen werden dem Positionsfehlersignal TE bzw. FE in Form der Signale $E_{1T}$ bzw. $E_{1F}$ überlagert, die die Form und das Spektrum eines Impulses haben und im Frequenzbereich zwischen 2kHz und 20kHz bei diesem Beispiel liegen.

Zur Verringerung der Gesamtpositionsfehler AY und $\Delta Z$ in y-bzw. z-Richtung bei einer gegebenen Frequenz ist es erforderlich, daß bei geöffnetem Regelkreis der Betrag der Übertragungsfunktion $T_T$ für den Spurregelkreis bzw.

$T_F$ für den Fokusregelkreis bei diesen Frequenzen groß ist.

Daher muß der Betrag der jeweiligen Übertragungsfunktion bei geöffnetem Regelkreis in dem Frequenzband, in dem die Maximalwerte der Amplituden der Relativbewegung der Compact-Disc 25 in Bezug auf die Abtastvorrichtung 15, 20 und der auf die Abtastvorrichtung 15, 20 wirkenden Beschleunigungen liegen, genügend groß sein, damit der Gesamtpositionsfehler $\Delta Y$ bzw. $\Delta Z$ nicht die maximal zulässigen Werte übersteigt.

Das Korrekturnetzwerk 115 bzw. 116 im jeweiligen Regelkreis hat mehrere Funktionen:

1. Gewährleistung der Stabilität.
2. Gewährleistung von erhöhter statischer und dynamischer Verstärkung zwischen 0Hz und 500Hz zur Kompensation der Erschütterungen.
3. Gewährleistung erhöhter Dämpfung bei geschlossenem Regelkreis im Frequenzbereich zwischen 500Hz und 20kHz zur Verringerung der Empfindlichkeit gegenüber Defekten der Compact-Disc 25.

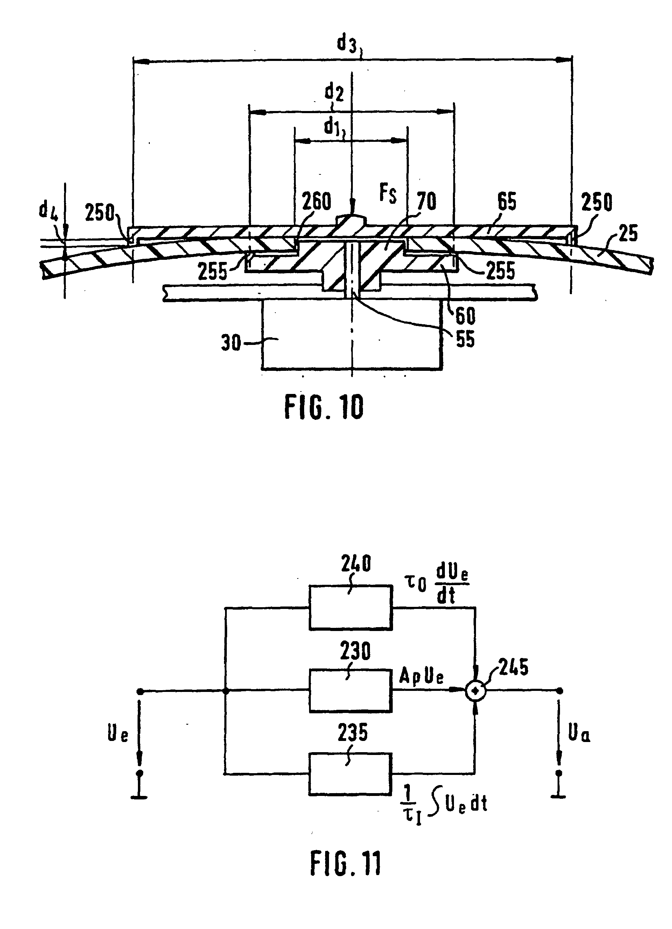

Zur Erfüllung dieser Funktionen umfaßt das jeweilige Korrekturnetzwerk 115, 116 einen Regler, dessen Zeitkonstanten so gewählt werden, daß die Breite des jeweiligen Frequenzbandes für die Regelung an den Frequenzbereich mit den durch das Erschütterungsspektrum 75 verursachten Maximalwerten der Amplituden angepaßt ist und die vorgegebene Stabilitätsreserve eingehalten wird. Vorzugsweise ist der Regler als PID-Regler mit einem Proportionalverstärker, einem Integrator und einem Differentiator, beispielsweise gemäß Figur 11 realisiert. Dabei wird eine Eingangsspannung $U_e$ des PID-Reglers durch einen Proportionalverstärker 230 mit der Proportionalverstärkung $A_p$ verstärkt. Außerdem wird die Eingangsspannung $U_e$ in einem Differentiator 240 nach der Zeit differenziert und mit einer Differentiationszeitkonstanten $\tau_D$ multipliziert. Schließlich wird die Eingangsspannung $U_e$ in einem Integrator 235 über der Zeit integriert und durch eine Integrationszeitkonstante $\tau_I$ dividiert. Die Ausgangsgrößen des Proportionalverstärkers 230, des Integrators 235 und des Differentiators 240 werden in einem Summierer 245 überlagert und bilden das Ausgangssignal $U_a$. Das jeweilige Korrekturnetzwerk 115 bzw. 116 enthält außerdem einen Tiefpaß zur Bandbegrenzung. Die Zeitkonstanten des PID-Reglers und des Tiefpasses sind dabei so gewählt, daß eine vorgegebene Stabilitätsreserve eingehalten wird, die Breite des jeweiligen Frequenzbandes für die Regelung an den Frequenzbereich angepaßt ist, in dem die Maximalwerte der Amplituden der Relativbewegung des Aufzeichnungsträgers 25 in Bezug auf die Abtastvorrichtung 15, 20 und der auf die Abtastvorrichtung 15, 20 wirkenden Beschleunigungen liegen und die Verstärkung in dem jeweiligen Frequenzband für die Regelung einen vorgegebenen Wert nicht unterschreitet.

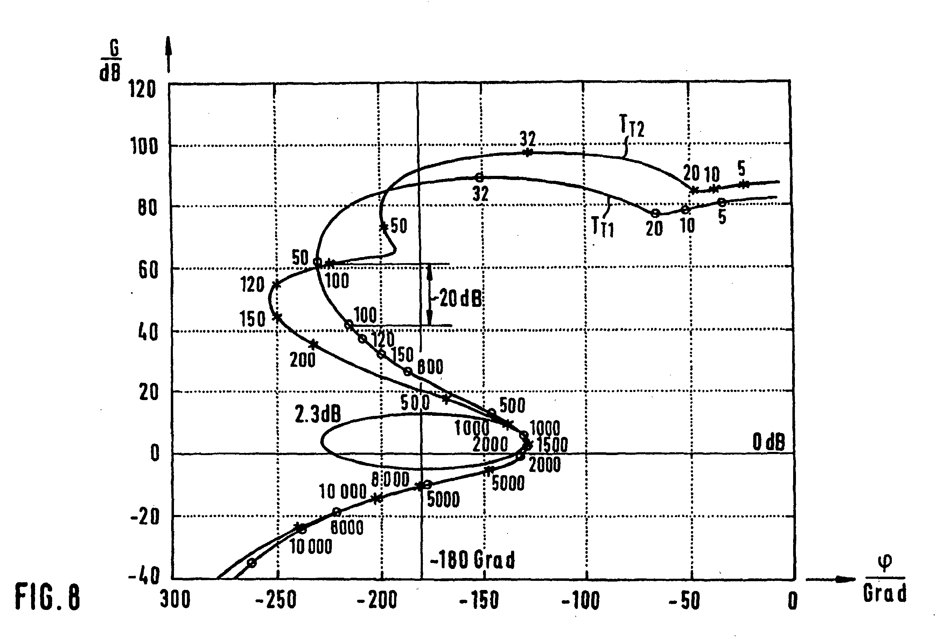

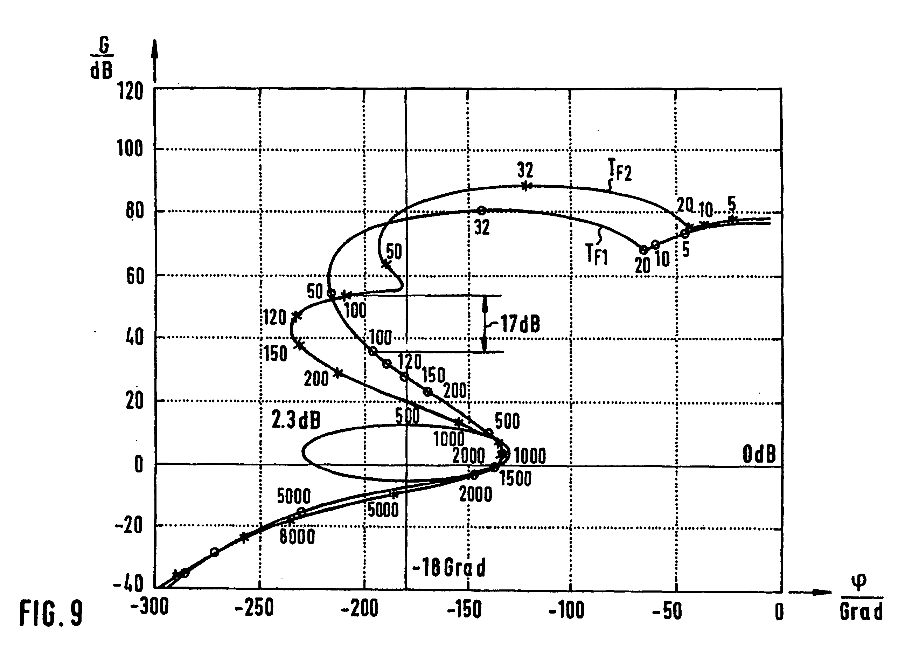

In Figur 8 ist das Black-Diagramm zweier Übertragungsfunktionen bei geöffnetem Regelkreis $T_{T1}$ und $T_{T2}$ des Spurregelkreises und in Figur 9 das Black-Diagramm zweier Übertragungsfunktionen bei geöffnetem Regelkreis $T_{F1}$ und $T_{F2}$ des Fokusregelkreises dargestellt. Dabei ist auf der Ordinate jeweils der Verstärkungsfaktor G in dB und auf der Abszisse die Phase $\varphi$ in Grad aufgetragen. Die in den Black-Diagrammen dargestellten Kurven sind nach der Frequenz parametriert. Der Punkt mit dem Verstärkungsfaktor 0 und der Phase -180° ist jeweils der Punkt maximaler Instabilität. Die jeweils eingezeichnete Black-Kontur in Form einer Ellipse führt noch zu Überschwingern bei der Sprungantwort von 2,3dB bzw. 30%. Für die Gewährleistung einer guten Stabilität der Regelung und einer ausreichenden Dämpfung bei geschlossenem Regelkreis reicht es in der Regel aus, wenn die Kurven der Übertragungsfunktionen im Black-Diagramm außerhalb der Black-Kontur mit 2,3dB Überschwingverhalten bleibt. Je größer der Abstand der Kurven für die Übertragungsfunktionen vom Punkt maximaler Instabilität bei 0dB und -180° Phase für eine gegebene Frequenz ist, desto besser ist das Einschwingverhalten des Systems bei geschlossenem Regelkreis bei dieser Frequenz und desto unempfindlicher ist das System gegenüber Defekten der Compact-Disc 25, die ja wie beschrieben zu impulsförmigen Störgrößen führen.

Für die bisher beschriebenen Regelkreise ergeben sich in Figur 8 und Figur 9 die Kurven für die Übertragungsfunktionen $T_{T1}$ bzw. $T_{F1}$, bei denen die Parametrierung nach Frequenzen durch Kreise dargestellt ist. Für den Spurregelkreis ergibt sich ein Maximum der Verstärkung von 88dB bei einer Frequenz von 32Hz, welche als Eigenfrequenz in y-Richtung für die Aufhängung des Objektivs 20 gewählt wurde. Die Verstärkung beträgt noch 62dB bei 50Hz, aber nicht mehr als 25dB bei 200Hz.

Für den Fokusregelkreis gemäß Figur 9 beträgt das Maximum der Verstärkung 80dB bei ebenfalls einer Frequenz von 32Hz, welche auch als Eigenfrequenz für die Aufhängung des Objektivs 20 in z-Richtung gewählt wurde. Die Verstärkungswerte liegen hier noch unter denen für den Spurregelkreis.

Wichtig ist es, daß auch im Bereich der maximalen spektralen Dichte des Erschütterungsspektrums 75 zwischen 10Hz und 30Hz oder unter Berücksichtigung eines Sicherheitsabstands zwischen 10Hz und 60Hz die Verstärkungsfaktoren G der Regelkreise einen jeweils vorgegebenen Wert nicht unterschreiten, damit in diesem Bereich Positionsfehler beim Abtastvorgang durch die Abtastvorrichtung 15, 20 durch die Regelkreise möglichst gut kompensiert werden. Bei den gezeigten Beispielen gemäß den Figuren 8 und 9 liegen die Verstärkungsfaktoren G im Bereich zwischen 10Hz und 60Hz alle oberhalb etwa 40dB.

Durch geeignete Wahl der durch $\tau_D$ in Figur 11 repräsentierten Zeitkonstanten des Differentiators 240 kann die Breite des jeweiligen Frequenzbandes für die Regelung an den Frequenzbereich angepaßt werden, in dem die Maximalwerte der Amplituden der Relativbewegung der Compact-Disc 25 in Bezug auf die Abtastvorrichtung 15, 20 und der auf die Abtastvorrichtung 15, 20 wirkenden Beschleunigungen liegen, bei gleichzeitiger Einhaltung der vorgegebenen Stabilitätsreserve in Form der 2,3dB Black-Kontur. Durch diese Maßnahme wird eine Verschiebung der Schnittfrequenz auf der 0dB-Achse bewirkt und damit der Frequenzbereich für die Verstärkung geeignet verschoben. So wird durch Senkung der Zeitkonstanten die Schnittfrequenz und damit auch die Verstärkung für Frequenzen unterhalb der neuen Schnittfrequenz erhöht. Gleichzeitig kann durch geeignete Wahl der Zeitkonstanten des Differentiators 240 im Bereich der Black-Kontur von 2,3dB ein geeigneter Phasenvorlauf eingestellt werden, so daß die Kurve der Übertragungsfunktion bei geöffnetem Regelkreis möglichst am Rand dieser Black-Kontur oder besser außerhalb dieser Black-Kontur liegt. Auf diese Weise kann gleichzeitig die vorgegebene Stabilitätsreserve eingehalten werden. Gleichzeitig führt dies auch dazu, daß insbesondere im Verstärkungsbereich die Kurve der Übertragungsfunktion steiler oder flacher wird, so daß auch dadurch ein gewisser Einfluß auf die Höhe der Verstärkung genommen werden kann.

Durch geeignete Wahl der durch $\tau_I$ repräsentierten Zeitkonstanten des Integrators 235 gemäß Figur 11 besteht die Möglichkeit, die Verstärkung in dem jeweiligen Frequenzband für die Regelung auf einen ersten vorgegebenen Wert zu erhöhen. Gemäß "Halbleiterschaltungstechnik" von Tietze, Schenk, 9. Auflage 1991 Seite 944 erfolgt diese verstärkungserhöhung vornehmlich bei tiefen Frequenzen, das heißt also in dem Bereich, in dem die beiden Regelkreise die Positionsstörungen kompensieren sollen. Die Zeitkonstanten des Integrators 235 müssen dabei so gewählt werden, daß die vorgegebene Stabilitätsreserve eingehalten wird. Die Zeitkonstanten des Integrators 235 müssen also auch so gewählt sein, daß die Kurve der Übertragungsfunktion im Bereich der Black-Kontur von 2,3dB nicht allzu weit ins Innere dieser Black-Ellipse rückt. Gegebenenfalls läßt sich dies im Zusammenwirken mit geeigneten Zeitkonstanten des Differentiators 240 durch entsprechenden Phasenvorlauf im kritischen Bereich der Black-Ellipse verhindern.

Schließlich besteht auch die Möglichkeit, durch Erhöhung der Verstärkung $A_p$ des Proportionalverstärkers 230 im jeweiligen Regelkreis die Kurve der jeweiligen Übertragungsfunktion in Richtung der Verstärkungsachse zu höherer Verstärkung hin zu verschieben, so daß sowohl die Bandbreite des Frequenzbandes für die Regelung als auch die Verstärkung auf jeweils einen zweiten vorgegebenen Wert erhöht wird. Wie aus der Figur 8 und Figur 9 abzuleiten ist, wird dann die Kurve der jeweiligen Übertragungsfunktion für einen Frequenzbereich oberhalb der Schnittfrequenz auf der 0dB-Achse in das Innere der Black-Kontur von 2,3dB hinein verschoben, so daß in diesem Frequenzbereich die vorgegebene Stabilitätsreserve nicht eingehalten wird. In diesem Frequenzbereich, der oberhalb von 1,5kHz liegt, liegen die durch Defekte der Compact-Disc 25 verursachten Störsignale, die damit nicht mehr ausreichend gedämpft werden können, da sie zu nah am kritischen Punkt maximaler Instabilität von 0dB und -180° liegen. Wenn die Kurve der Übertragungsfunktion in diesem Frequenzbereich durch geeignete Wahl der Zeitkonstanten des Differentiators 240 nicht mehr durch entsprechenden Phasenvorlauf aus dem Inneren der Black-Kontur von 2,3dB entfernt werden kann, so muß verhindert werden, daß Störsignale in diesem Frequenzbereich entstehen. Dasselbe gilt gegebenenfalls auch für eine Verstärkungserhöhung beispielsweise mittels des Integrators 235 und/oder des Proportionalverstärkers 230, wie oben beschrieben. Dazu kann die Drehgeschwindigkeit der Compact-Disc 25 soweit erhöht werden, daß die Frequenzen dieser Störsignale in einem Frequenzbereich liegen, in dem eine vorgegebene Dämpfung durch den jeweiligen Regelkreis nicht unterschritten wird. Dies muß zur Einhaltung des vorgegebenen Stabilitätskriteriums ein Frequenzbereich sein, bei dem die Kurve der jeweiligen Übertragungsfunktion außerhalb der Black-Kontur von 2,3dB liegt. Durch Verdoppeln der Drehgeschwindigkeit der Compact-Disc 25 verdoppelt sich auch die Frequenz der Störsignale, eine Vervierfachung der Drehgeschwindigkeit führt auch zu einer Vervierfachung der Frequenz der Störsignale.

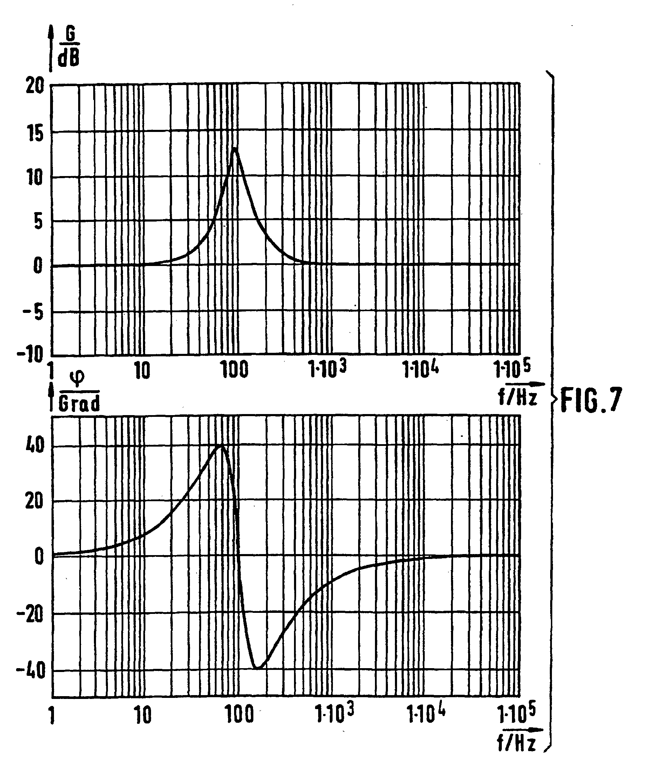

Eine weitere Maßnahme zur Anhebung der Verstärkung an den Stellen im jeweiligen Frequenzband für die Regelung, an denen die Amplituden der Relativbewegung der Compact-Disc 25 in Bezug auf die Abtastvorrichtung 15, 20 und die auf die Abtastvorrichtung 15, 20 wirkenden Beschleunigungen maximal sind, besteht darin, im jeweiligen Korrekturnetzwerk 115 bzw. 116 einen Vorverstäker zu integrieren. In Figur 7 ist der Verlauf der Verstärkung G in dB und der Phase $\varphi$ in Grad jeweils in Abhängigkeit von der Frequenz f in Hz eines geeigneten zusätzlichen Verstärkers dargestellt. Gemäß Figur 7 führt die Verwendung des zusätzlichen Verstärkers zu einer Anhebung der Verstärkung im Bereich von 100Hz um 13dB, wobei nur ein Phasennachlauf von -40° bei 150Hz auftritt und der Phasennachlauf für Frequenzen größer 400Hz zwischen 0 und - 20° liegt. Die Auswirkung des beschriebenen zusätzlichen Verstärkers auf die Kurven der Übertragungsfunktionen $T_{T1}$ und $T_{F1}$, deren Frequenzparametrierung durch Kreise dargestellt ist, ist in Form der sich ergebenden neuen Kurven der Übertragungsfunktionen $T_{T2}$ in Figur 8 und $T_{F2}$ in Figur 9 dargestellt, wobei die Frequenzparametrierung bei diesen neuen Kurven durch Kreuze dargestellt ist. Der zusätzlichen Verstärker wird dabei so dimensioniert, daß sein Verstärkungsmaximum bei einer Frequenz, bei der auch die Amplituden der Relativbewegung der Compact-Disc 25 in Bezug auf die Abtastvorrichtung 15, 20 und die auf die Abtastvorrichtung 15, 20 wirkenden Beschleunigungen ein Maximum aufweisen. Somit können diese Amplituden und Beschleunigungen optimal kompensiert werden. Bei den Kurven für die Übertragungsfunktionen $T_{T2}$ und $T_{F2}$ wurden außerdem die Zeitkonstanten des Differentiators 240, des Integrators 235 und des Tiefpasses geeignet gewählt, um die Regelbedingungen in dem Frequenzbereich, in dem die Amplituden der Relativbewegung der Compact-Disc 25 in Bezug auf die Abtastvorrichtung 15, 20 und die auf Abtastvorrichtung 15, 20 wirkenden Beschleunigungen maximal sind, zu verbessern, das heißt, die Verstärkung im Frequenzbereich von 0 bis 500Hz anzuheben, und die Dämpfung bei geschlossener Regelschleife im Frequenzbereich zwischen 2kHz und 20kHz, in dem in der Regel die Störsignale aufgrund der Defekte der Compact-Disc 25 liegen, zu erhöhen.

In den beiden Black-Diagrammen gemäß Figur 8 und Figur 9 erkennt man, daß sowohl für die Kurve der Übertragungsfunktion $T_{T2}$ als auch für die Kurve der Übertragungsfunktion $T_{F2}$ die Verstärkungen im Frequenzband von 0 bis 500Hz größer sind als jene für dieselben Frequenzen bei den Kurven für die Übertragungsfunktionen $T_{T1}$ bzw. $T_{F1}$. So liegt der Maximalverstärkungsabstand von 20dB für den Spurregelkreis bzw. von 17dB für den Fokusregelkreis bei der Frequenz 100Hz, bei der der zusätzlichen Verstärker ein Verstärkungsmaximum von13dB aufweist. Der Phasennachlauf des zusätzlichen Verstärkers gemäß Figur 7 für Frequenzen oberhalb 100Hz macht sich ebenfalls bemerkbar, um dann gemäß dem Phasendiagramm von Figur 7 bei höheren Frequenzen ab ca. 500Hz für den Spurregelkreis und ab ca. 1000Hz für den Fokusregelkreis vernachlässigbar zu werden. Für das Frequenzband zwischen 1kHz und 10kHz weisen die beiden Regelkreise dieselbe Stabilitätsreserve und dieselbe Dämpfung bei geschlossenem Regelkreis auf, da die Kurven für die Übertragungsfunktionen $T_{T2}$ und $T_{F2}$ nahezu identisch mit den Kurven der Übertragungsfunktionen $T_{T1}$ bzw. $T_{F1}$ außerhalb bzw. am Rand der Black-Kontur bei 2,3dB bleiben. Die Schnittfrequenz auf der 0dB-Achse ist beim Spurregelkreis gemäß Figur 8 auf über 2000Hz bei der Kurve $T_{T2}$ gegenüber der Kurve $T_{T1}$ angestiegen. Beim Fokusregelkreis ist die Schnittfrequenz auf der 0dB-Achse von 1500Hz auf 2000Hz angestiegen. Dies ergibt sich aufgrund der Wahl der Zeitkonstanten des Differentiators 240. Daher haben sich die Frequenzen auf den Kurven der Übertragungsfunktionen $T_{T2}$ und $T_{F2}$ gegenüber den Frequenzen auf den Kurven der Übertragungsfunktionen $T_{T1}$ bzw. $T_{F1}$ zu höheren Werten hin verschoben. So nimmt der Punkt für 8000Hz bei der Kurve $T_{T2}$ und bei der Kurve $T_{F2}$ nun nahezu dieselbe Position ein, wie die Frequenz 5000Hz bei den Kurven $T_{T1}$ bzw. $T_{F1}$. Aufgrund der beschriebenen Verbesserungen der Regelung der beiden Regelkreise ist es möglich ein Compact-Disc-Laufwerk ohne zusätzliche Feder- und Dämpfungsmittel im Gehäuse 1 des Autoradios zu montieren.

Bei der Montage des gekoppelten mechanischen Schwingers gemäß Figur 4 wird bei dem gewählten Ausführungsbeispiel ein Frequenzwert von etwa 60Hz von der Eigenfrequenz des Grundträgers 10 und der Eigenfrequenz des Gehäuses 5 des Compact-Disc-Laufwerks nicht unterschritten. Somit weisen die Schwingungen des im Gehäuse 5 des Compact-Disc-Laufwerks montieren Grundträgers 10 nur Amplituden von maximal ± 0,5mm auf, so daß keine Feder- und Dämpfungsmittel erforderlich sind und Platz eingespart wird. Aus demselben Grund wäre auch die Wahl der Eigenfrequenz des Lesekopfes 15 und/oder des Objektivs 20 oberhalb dieser Frequenz von 60Hz von Vorteil. Durch den Verzicht auf Feder- und Dämpfungsmittel kann eine beliebige Einbaulage des Compact-Disc-Laufwerks im Gehäuse 1 des Autoradios sowie ein verbessertes Temperaturverhalten und Alterungsverhalten erreicht werden, da die Feder- und Dämpfungsmittel normalerweise aus temperatur- und alterungsabhängigen Viskose- bzw. Elastomermaterial hergestellt werden. Andererseits müssen die Massen, die Eigenfrequenzen und die Dämpfungskonstanten des gekoppelten mechanischen Schwingers gemäß Figur 4 so gewählt werden, daß die Frequenzen, bei denen die Amplituden der Relativbewegung der Compact-Disc 25 in Bezug auf die Abtastvorrichtung 15, 20 und die auf die Abtastvorrichtung 15, 20 wirkenden Beschleunigungen maximal sind, in diesem Beispiel einen vorgegebenen Wert von 200Hz unterschreiten. Oberhalb dieses Wertes ist es bei dem gewählten Ausführungsbeispiel nur unter hohem Aufwand möglich, die lokale Verstärkung durch einen zusätzlichen Verstärker oder ein durch geeignete Wahl der Zeitkonstanten verbessertes Korrekturnetzwerk zu erhöhen.

Eine bevorzugte Lösung unter Einhaltung dieser oberen Grenzfrequenz von 200Hz ergibt sich beispielsweise dann, wenn die Compact-Disc 25 auf den Grundträger 10 mit einer Eigenfrequenz, die größer oder gleich 180Hz ist, montiert wird und bei der der Lesekopf 15 auf den Grundträger 10 mit einer Eigenfrequenz montiert wird, die größer oder gleich 200Hz ist. Bei dieser Lösung ist außerdem die Eigenfrequenz des Gehäuses 5 des Compact-Disc-Laufwerks mit 130Hz größer als 60Hz gewählt und ebenso auch die Eigenfrequenz des Grundträgers 10 mit 160Hz. Die Maxima der Positionsfehler ergeben sich dann bei 100Hz oder in der Nähe von 100Hz und ein zusätzlichen Verstärker mit Verstärkungsmaximum bei 100Hz korrigiert diese Positionsfehler ohne die Stabilität und die Toleranz gegenüber den Defekten der Compact-Disc 25 zu verringern.

Ganz allgemein ist es möglich, jedes Positionsfehlermaximum im Frequenzband zwischen 60Hz und 200Hz zu korrigieren, solange das System in den Grenzen bleibt, in denen es linear ist, das heißt solange die Beschleunigungen, die sich auf den Grundträger 10 auswirken, nicht die Grenze überschreiten, die durch die Kräfte gegeben ist, die das mechanische Spiel unterdrücken, solange der Regelbereich des Lesekopfes 15 nicht überschritten wird und solange die Steuerspannungen zur Nachführung des Objektivs 20 nicht in Sättigung gehen.

Wird die Compact-Disc 25 gemäß Figur 10 zwischen die erste Platte 60 mit einem Durchmesser $d_2$ von 30mm und die zweite Platte 65 mit einem Durchmesser $d_3$, der größer oder gleich 60mm ist, eingespannt, liegt die Eigenfrequenz der Compact-Disc 25 in der Größenordnung von 180Hz oder darüber. Dazu ist es jedoch erforderlich, daß die Einspannkräfte, die auf der ersten Platte 60 wirken, entlang einem Kreis mit einem Durchmesser von ungefähr 30mm verteilt sind, und daß die Einspannkräfte, die auf der zweiten Platte 65 wirken, auf einem Kreis mit einem Durchmesser von ungefähr 60mm oder mehr verteilt sind, so daß Biegemomente erzeugt werden, die die Compact-Disc 25 in axialer Richtung, das heißt in z-Richtung leicht glockenförmig deformieren. Dies wird beispielsweise dadurch erreicht, daß wie in Figur 10 auf der der ersten Platte 60 zugewandten Seite der zweiten Platte 65 eine ringförmige Hervorhebung 250 mit dem Radius $d_3$ der zweiten Platte 65 angebracht wird. Zur Unterstützung dieser glockenförmigen Deformation kann auch gemäß Figur 10 auf der der zweiten Platte 65 zugewandten Seite der ersten Plattee 60 eine ringförmige Hervorhebung 255 mit dem Radius $d_2$ angebracht werden. Die Biegung der Compact-Disc 25 zwischen dem Vorsprung 70 der ersten Platte 60 zur Zentrierung der Compact-Disc 25 und der ringförmigen Hervorhebung 250 der zweiten Platte 65 ist $d_4$ und liegt zwischen 0,1 und 0,2mm, wenn $d_3$=60mm ist und der Durchmesser $d_1$ des Durchbruchs 260 der Compact-Disc 25, in den der Vorsprung 70 greift, 15mm beträgt. Die Einspannkraft $F_S$ wirkt zentral auf die zweite Platte 65 in Richtung des Compact-Disc-Motors 30. Die Kraft $F_S$ muß genügend groß sein, um die Compact-Disc zu deformieren. Ein geeigneter Wert ist beispielsweise $F_S$=3N. Um die Motorachse 55 nicht zu sehr zu belasten, kann in die erste Platte 60 ein Permanentmagnet eingebaut werden, der mit einem ferromagnetischen Teil in der zweiten Platte 65 zusammenwirkt, oder umgekehrt. Mit Hilfe von Federn kann dann das Spiel der Motorachse 55 in z-Richtung unterdrückt werden, wobei beispielsweise eine Federkraft von 1,5N eingesetzt wird.

Weiterhin kann die erste Platte 60 aus einem dämpfenden Material hergestellt werden, das in z-Richtung leicht deformierbar ist und sich wie eine Membran biegen läßt. Diese elastische Montage aus einem dämpfenden Material ermöglicht eine wesentliche Erhöhung der Dämpfungskonstanten, beispielsweise bei Verwendung von Polyurethan für die erste Platte 60. Dadurch werden die Amplituden der Schwingungen der Compact-Disc 25 verringert und die Fokusregelung erleichtert.

Eine höhere Eigenfrequenz der Compact-Disc 25 kann dadurch erreicht werden, daß der Durchmesser $d_3$ der zweiten Platte 65 weiter vergrößert wird. So lassen sich 200Hz bei einem Durchmesser von 70mm erreichen.

Die im beschriebenen Ausführungsbeispiel verwendeten Parameterwerte sind beispielhaft und je nach Bedarf zu wählen.

**Patentansprüche**

1. Verfahren zum Regeln der Fokussierung eines zum Lesen von Daten auf einen rotierenden Aufzeichnungsträger (25) gerichteten Lichtstrahls einer Abtastvorrichtung (15, 20) auf den Aufzeichnungsträger (25) und der Führung des Lichtstrahls entlang den Datenspuren des Aufzeichnungsträgers (25) durch jeweils einen Regelkreis, wobei die Abtastvorrichtung (15, 20) und der Aufzeichnungsträger (25) auf einem Grundträger (10) in mindestens einem Gehäuse (1) montiert werden, wobei das mindestens eine Gehäuse (1) mit dem Grundträger (10), der Abtastvorrichtung (15, 20) und dem Aufzeichnungsträger (25) einen gekoppelten mechanischen Schwinger bilden, der in Abhängigkeit eines Erschütterungsspektrums (75) erschüttert wird, daß durch die Erschütterung die Abtastvorrichtung (15, 20) beschleunigt wird und eine Relativbewegung des Aufzeichnungsträgers (25) in Bezug auf die Abtastvorrichtung (15, 20) bewirkt wird, wobei die Amplituden der Relativbewegung und die Beschleunigungen einen Frequenzgang aufweisen, **dadurch gekennzeichnet, daß** die Massen, die Federkonstanten und die Dämpfungswerte der Abtastvorrichtung (15, 20), des Aufzeichnungsträgers (25), des Grundträgers (10) und des mindestens einen Gehäuses (1) so gewählt werden, daß die Frequenzen, bei denen die Amplituden der Relativbewegung des Aufzeichnungsträgers (25) in Bezug auf die Abtastvorrichtung (15, 20) und die auf die Abtastvorrichtung (15, 20) wirkenden Beschleunigungen maximal sind, in einem Frequenzband des jeweiligen Regelkreises liegen, in dem eine Verstärkung durchgeführt wird, und die Maximalwerte der Amplituden in dem Frequenzband einen vorgegebenen Wert nicht überschreiten.

2. Verfahren nach Anspruch 1, **dadurch gekennzeichnet, daß** die Massen, die Federkonstanten und die Dämpfungswerte der Abtastvorrichtung (15, 20), des Aufzeichnungsträgers (25), des Grundträgers (10) und des mindestens einen Gehäuses (1) so gewählt werden, daß die Frequenzen, bei denen die Amplituden der Relativbewegung des Aufzeichnungsträgers (25) in Bezug auf die Abtastvorrichtung (15, 20) und die auf die Abtastvorrichtung (15, 20) wirkenden Beschleunigungen maximal sind, einen Wert von etwa 60 Hz überschreiten.

3. Verfahren nach Anspruch 1 oder 2, **dadurch gekennzeichnet, daß** die Zeitkonstanten eines Differentiators (240) im jeweiligen Regelkreis so gewählt werden, daß die Breite des jeweiligen Frequenzbandes für die Regelung an den Frequenzbereich angepaßt ist, in dem die Maximalwerte der Amplituden der Relativbewegung des Aufzeichnungsträgers (25) in Bezug auf die Abtastvorrichtung (15, 20) und der auf die Abtastvorrichtung (15, 20) wirkenden Beschleunigungen liegen, und die vorgegebene Stabilitätsreserve eingehalten wird.

4. Verfahren nach Anspruch 1, 2 oder 3, **dadurch gekennzeichnet, daß** die Zeitkonstanten eines Integrators (235) im jeweiligen Regelkreis so gewählt werden, daß die Verstärkung in dem jeweiligen Frequenzband für die Regelung auf einen ersten vorgegebenen Wert erhöht wird und die vorgegebene Stabilitätsreserve eingehalten wird.

**5.** Verfahren nach einem der vorherigen Ansprüche, **dadurch gekennzeichnet, daß** mit einem Proportionalverstärker (230) im jeweiligen Regelkreis eine Erhöhung der Verstärkung und der Bandbreite des Frequenzbandes für die Regelung auf jeweils einen zweiten vorgegebenen Wert durchgeführt wird.

**6.** Verfahren nach einem der vorherigen Ansprüche, **dadurch gekennzeichnet, daß** die Verstärkung an den Stellen im jeweiligen Frequenzband für die Regelung, an denen die Amplituden der Relativbewegung des Aufzeichnungsträgers (25) in Bezug auf die Abtastvorrichtung (15, 20) und die auf die Abtastvorrichtung (15, 20) wirkenden Beschleunigungen maximal sind, vorzugsweise durch einen zusätzlichen Verstärker angehoben wird.

**7.** Verfahren nach einem der vorherigen Ansprüche, **dadurch gekennzeichnet, daß** bei der Montage des gekoppelten Schwingers ein vorgegebener Frequenzwert, insbesondere etwa 60Hz, von der Eigenfrequenz des Grundträgers (10) und/oder der Eigenfrequenz des mindestens einen Gehäuses (1) nicht unterschritten wird.

**8.** Verfahren nach einem der vorherigen Ansprüche, **dadurch gekennzeichnet, daß** ein jeweils vorgegebener Wert von den Verstärkungsfaktoren der Regelkreise in einem Frequenzbereich maximaler spektraler Dichte des Erschütterungsspektrums (75) nicht unterschritten wird, wobei der Wert so vorgegeben wird, daß eine vorgegebene Regelgenauigkeit der Regelkreise eingehalten wird.

**9.** Verfahren nach einem der vorherigen Ansprüche, **dadurch gekennzeichnet, daß** die Drehgeschwindigkeit des Aufzeichnungsträgers (25) so gewählt wird, daß die Frequenzen von Störsignalen, die aufgrund von Defekten des Aufzeichnungsträgers (25) den aufgrund der Gehäuseerschütterungen im jeweiligen Regelkreis gebildeten Positionsfehlersignalen überlagert werden, in einem Frequenzbereich liegen, in dem eine vorgegebene Dämpfung durch den jeweiligen Regelkreis nicht unterschritten wird.

**10.** Verfahren nach einem der vorherigen Ansprüche, **dadurch gekennzeichnet, daß** der Aufzeichnungsträger (25) so zwischen eine erste, von der Achse (55) eines Motors (30) angetriebenen Platte (60), und eine zweite Platte (65) eingespannt wird, daß die Eigenfrequenz des Aufzeichnungsträgers (25) innerhalb eines vorgegebenen Bereichs, insbesondere oberhalb von etwa 60Hz, liegt.

**11.** Verfahren nach einem der vorherigen Ansprüche, **dadurch gekennzeichnet, daß** der Radius der zweiten Platte (65) größer als der Radius der ersten Platte (60) gewählt wird und daß auf der der ersten Platte (60) zugewandten Seite der zweiten Platte (65) eine ringförmige Hervorhebung (250) mit dem Radius der zweiten Platte (65) angebracht wird, so daß der Aufzeichnungsträger (25) glockenförmig zwischen die zwei Platten (60, 65) eingespannt ist.

**12.** Verfahren nach einem der vorherigen Ansprüche, **dadurch gekennzeichnet, daß** der gekoppelte mechanische Schwinger in einem Kraftfahrzeug angeordnet wird, wobei sich das Erschütterungsspektrum (75) in Abhängigkeit der auf das Kraftfahrzeug wirkenden Vibrationen ergibt.

**Claims**

**1.** Method for controlling the focussing of a light beam, directed onto a rotating recording medium (25) for the purpose of reading data, from a scanning apparatus (15, 20) onto the recording medium (25) and the guidance of the light beam along the data tracks on the recording medium (25) using a respective control loop, where the scanning apparatus (15, 20) and the recording medium (25) are mounted on a base support (10) in at least one housing (1), where the at least one housing (1) forms, with the base support (10), the scanning apparatus (15, 20) and the recording medium (25), a coupled mechanical oscillator which oscillates on the basis of an oscillation spectrum (75), where the oscillation accelerates the scanning apparatus (15, 20) and brings about a relative movement by the recording medium (25) in relation to the scanning apparatus (15, 20), and where the amplitudes of the relative movement and the accelerations have a frequency response, **characterized in that** the masses, the spring constants and the damping values of the scanning apparatus (15, 20), of the recording medium (25), of the base support (10) and of the at least one housing (1) are chosen such that the frequencies at which the amplitudes of the relative movement by the recording medium (25) in relation to the scanning apparatus (15, 20) and the accelerations acting on the scanning apparatus (15, 20) are at a maximum are in a frequency band for the respective control loop in which amplification is performed, and the maximum values of the amplitudes do not exceed a prescribed value in the frequency band.

**2.** Method according to Claim 1, **characterized in that** the masses, the spring constants and the damping values of the scanning apparatus (15, 20), of the recording medium (25), of the base support (10) and of the at least one housing (1) are chosen such that the frequencies at which the amplitudes of the relative movement by the recording medium (25) in relation to the scanning apparatus (15, 20) and the accelerations acting on the scanning apparatus (15, 20) are at a maximum exceed a value of approximately 60 Hz.

3.  Method according to Claim 1 or 2, **characterized in that** the time constants of a differentiator (240) in a respective control loop are chosen such that the width of the respective frequency band for the control is matched to the frequency range which contains the maximum values of the amplitudes of the relative movement by the recording medium (25) in relation to the scanning apparatus (15, 20) and of the accelerations acting on the scanning apparatus (15, 20), and the prescribed stability reserve is observed.

4.  Method according to Claim 1, 2 or 3, **characterized in that** the time constants of an integrator (235) in the respective control loop are chosen such that the gain in the respective frequency band for the control is increased to a first prescribed value and the prescribed stability reserve is observed.

5.  Method according to one of the preceding claims, **characterized in that** a proportional amplifier (230) in a respective control loop is used to increase the gain and the bandwidth of the frequency band for the control to a respective second prescribed value.

6.  Method according to one of the preceding claims, **characterized in that** the gain at those points in the respective frequency band for the control at which the amplitudes of the relative movement by the recording medium (25) in relation to the scanning apparatus (15, 20) and the accelerations acting on the scanning apparatus (15, 20) are at a maximum is preferably raised by an additional amplifier.

7.  Method according to one of the preceding claims, **characterized in that** fitting the coupled oscillator does not involve the natural frequency of the base support (10) and/or the natural frequency of the at least one housing (1) dropping below a prescribed frequency value, particularly approximately 60 Hz.

8.  Method according to one of the preceding claims, **characterized in that** the gain factors of the control loops in a frequency range with maximum spectral density of the oscillation spectrum (75) do not drop below a respective prescribed value, the value being prescribed such that a prescribed control accuracy for the control loops is observed.

9.  Method according to one of the preceding claims, **characterized in that** the rotation speed of the recording medium (25) is chosen such that the frequencies of interference signals which, owing to defects in the recording medium (25), are superimposed on the position-error signals formed in the respective control loop on account of the housing oscillations are in the frequency range in which there is no drop below a prescribed damping by the respective control loop.

10. Method according to one of the preceding claims, **characterized in that** the recording medium (25) is clamped between a first disc (60), which is driven by the axle (55) of a motor (30), and a second disc (65) such that the natural frequency of the recording medium (25) is within a prescribed range, particularly above approximately 60 Hz.

11. Method according to one of the preceding claims, **characterized in that** the radius of the second disc (65) is chosen to be greater than the radius of the first disc (60), and **in that** an annular protuberance (250) having the radius of the second disc (65) is put on the side of the second disc (65) which faces the first disc (60), so that the recording medium (25) is clamped between the two discs (60, 65) in the shape of a bell.

12. Method according to one of the preceding claims, **characterized in that** the coupled mechanical oscillator is arranged in a motor vehicle, with the oscillation spectrum (75) being obtained on the basis of the vibrations acting on the motor vehicle.

**Revendications**

1.  °) Procédé de réglage de la focalisation sur un support d'enregistrement (25), d'un faisceau lumineux d'un analyseur (15, 20), dirigé sur le support d'enregistrement (25) rotatif pour lire des données, et de la direction du faisceau lumineux le long des pistes de données du support d'enregistrement (25) par un circuit de réglage respectif, selon lequel l'analyseur (15, 20) et le support d'enregistrement (25) sont montés sur un support de base (10) dans au moins un boîtier (1), le au moins un boîtier (1) avec le support de base (10), l'analyseur (15, 20) et le support d'enregistrement (25) forment un vibrateur mécanique accouplé qui est mis en vibration en fonction d'un spectre de vibration (75), l'analyseur (15, 20) étant accéléré par la vibration et un mouvement relatif du support d'enregistrement (25) étant effectué par rapport à l'analyseur (15, 20), les amplitudes du mouvement relatif et les accélérations présentant une réponse fréquentielle,
**caractérisé en ce que**
les mesures, les constantes élastiques et les valeurs d'atténuation de l'analyseur (15, 20), du support d'enregistrement (25), du support de base (10) et du, au moins un, boîtier (1) sont choisies de sorte que les fréquences, dans lesquelles les amplitudes du mouvement relatif du support d'enregistrement (25) par rapport à l'analyseur (15, 20) et les accélérations agissant sur l'analyseur (15, 20) sont maximales, reposent dans une bande de fréquence du circuit de réglage respectif dans lequel on réalise une amplification, et les valeurs maximales des amplitudes ne dépassent pas une valeur prédéfinie dans la bande de fréquence.

**2.** Procédé selon la revendication 1,
**caractérisé en ce que**
les mesures, les constantes élastiques et les valeurs d'atténuation de l'analyseur (15, 20), du support d'enregistrement (25), du support de base (10) et du, au moins un, boîtier (1) sont choisies de sorte que les fréquences, dans lesquelles les amplitudes du mouvement relatif du support d'enregistrement (25) par rapport à l'analyseur (15, 20) et les accélérations agissant sur l'analyseur (15, 20) sont maximales, dépassent une valeur d'environ 60 Hz.

**3.** Procédé selon la revendication 1 ou 2,
**caractérisé en ce que**
les constantes temporelles d'un différentiateur (240) sont choisies dans le circuit de réglage respectif de sorte que la largeur de la bande de fréquence respective est adaptée pour la régulation au domaine fréquentiel dans lequel se trouvent les valeurs maximales des amplitudes du mouvement relatif du support d'enregistrement (25) par rapport à l'analyseur (15, 20) et des accélérations agissant sur l'analyseur (15, 20), et la marge de stabilité prédéfinie est maintenue.

**4.** Procédé selon la revendication 1, 2 ou 3,
**caractérisé en ce que**
les constantes temporelles d'un intégrateur (235) sont choisies dans le circuit de réglage respectif de sorte que l'amplification de la bande de fréquence respective pour la régulation est augmentée sur une première valeur prédéterminée et la marge de stabilité prédéfinie est maintenue.

**5.** Procédé selon l'une des revendications précédentes,
**caractérisé en ce qu'**
on réalise, avec un amplificateur proportionnel (230) dans le circuit de réglage respectif, une augmentation de l'amplification et de la largeur de bande de la bande de fréquence pour la régulation sur une seconde valeur prédéfinie respective.

**6.** Procédé selon l'une des revendications précédentes,
**caractérisé en ce qu'**
on augmente l'amplification des positions dans la bande de fréquence respective pour la régulation, pour lesquelles les amplitudes du mouvement relatif du support d'enregistrement (25) par rapport à l'analyseur (15, 20) et les accélérations agissant sur l'analyseur (15, 20) sont maximales, de préférence par un amplificateur complémentaire.

**7.** Procédé selon l'une des revendications précédentes,
**caractérisé en ce que**
lors du montage du vibrateur accouplé, on ne descend pas en dessous d'une valeur de fréquence prédéterminée, en particulier environ 60 Hz, de la fréquence propre du support de base (10) et/ou de la fréquence propre du, au moins un, boîtier (1).

**8.** Procédé selon une des revendications précédentes,
**caractérisé en ce qu'**

une valeur prédéterminée respective n'est pas diminuée par les facteurs d'amplification des circuits de réglage dans un domaine fréquentiel de densité spectrale maximale du spectre de vibration (75), dans lequel la valeur est prédéterminée de manière à maintenir une précision de réglage prédéterminée des circuits de réglage.

9. Procédé selon une des revendications précédentes,
   **caractérisé en ce que**
   la vitesse de rotation du support d'enregistrement (25) est choisie de telle sorte que les fréquences des signaux parasites, qui superposent en raison des défauts du support d'enregistrement (25) les signaux de contrôle d'erreurs de position formés dans le circuit de réglage respectif en raison des vibrations du boîtier, reposent dans un domaine fréquentiel dans lequel une atténuation prédéterminée n'est pas diminuée par le circuit de réglage respectif.

10. Procédé selon une des revendications précédentes,
    **caractérisé en ce que**
    le support d'enregistrement (25) est enserré entre une première plaque (60) entraînée par l'axe (55) d'un moteur (30) et une seconde plaque (65) de sorte que la fréquence propre du support d'enregistrement (25) est située à l'intérieur d'un domaine prédéterminé, en particulier au-dessus de 60 Hz environ.

11. Procédé selon une des revendications précédentes,
    **caractérisé en ce qu'**
    on a choisi un rayon de la seconde plaque (65) supérieur au rayon de la première plaque (60) et, sur la face de la seconde plaque (65) opposée à la première plaque (60) on a disposé une saillie annulaire vers l'avant (250) avec le rayon de la seconde plaque (65) de sorte que le support d'enregistrement (25) est serré sous forme d'entonnoir entre les deux plaques (60, 65).

12. Procédé selon une des revendications précédentes,
    **caractérisé en ce que**
    le vibrateur mécanique accouplé est disposé dans un véhicule automobile dans lequel le spectre de vibration (75) se produit en fonction des vibrations agissant sur le véhicule automobile.

FIG. 1

EP 0 931 312 B1

FIG. 2

FIG. 3

FIG. 4

FIG. 5

EP 0 931 312 B1

FIG. 6

FIG.7

FIG. 8

EP 0 931 312 B1

FIG.9

EP 0 931 312 B1

**FIG. 10**

**FIG. 11**